# EUROPEAN PATENT APPLICATION

(11) **EP 4 567 665 A1**
(43) Date of publication of application: **11.06.2025**
(21) Application number: 23307135.6
(22) Date of filing: 05.12.2023
(51) Int. Cl.: G06K 19/077, H01Q 1/38

(54) **ANTENNA ASSEMBLY AND SMART TAG OR SMARTCARD WITH SUCH AN ANTENNA ASSEMBLY**

(71) Applicant: Linxens Holding, 78200 Mantes-la-Jolie (FR)
(72) Inventor: Hongnara, Tanan, 13160 Phra Nakhon Si Ayutthaya (TH); Khusuwan, Khiengkrai, 13160 Phra Nakhon Si Ayutthaya (TH); Wattanasin, Pra-orn, 13160 Phra Nakhon Si Ayutthaya (TH)
(74) Representative: Grünecker Patent- und Rechtsanwälte PartG mbB

(57) **Abstract**

In some illustrative embodiments, an antenna assembly is provided. The antenna assembly comprises a carrier substrate, an antenna wiring pattern formed on the carrier substrate, and a filter component coupled with the antenna wiring pattern. The filter component may comprise a high pass filter component.

## Description

### Field of the Disclosure

The present disclosure relates to an antenna assembly and to a smart tag or smartcard with such an antenna assembly.

### Technological Background

Contactless smart tags or cards using antenna assemblies for wireless communication are employed in an increasing range of applications including contactless transactions and data exchange. It may provide for a simplified setup of more complex communications and is becoming increasingly prevalent in the fleet industry.

Generally, such smart tags or cards include small chips that store data and, in the application of tags, may be often incorporated into stickers, magnets, or labels. With increasing use of contactless transactions and data exchange by smart tags, wireless technology nowadays plays a huge role in access control, public transportation, mobile payment and other fields.

With the rising importance of smart phones also the topic of charging is becoming more important. Nowadays, wireless charging stations can be found for instance in public places, shopping centers, restaurants and also cars. Wireless charging is not only more comfortable than wired charging, but also reduces interoperability issues and removes the mechanical connectors, which are prone wear.

Wireless charging and wireless transaction and/or data exchange simplify our life by removing small everyday actions. For example, both technologies are more and more implemented in automobiles to increase the drivers comfort. Despite of the individual advantages and positive effects on the user's comfort, there are also challenges when combining these technologies because systems used for wireless charging may affect use of smart tags or smartcards and even negatively influence tags or cards by damaging tags or cards when exposed the strong charging field if they are arranged between charger and phone.

Often, cell phone cases are equipped with a storage slot for accommodating smart tags or smartcards which an user wishes to have at his hand during everyday life. These storage slots are typically at a bottom side opposite a display side of the cell phone, thereby posing the risk of arranging a smart tag or smartcard stored in the storage slot on a charging surface of a wireless charger when positioning the cell phone on the wireless charger for charging the cell phone. Accordingly, the user's comfort of having a smart tag or smartcard together with the cell phone at disposal, is in conflict with the comfort of wireless charging the cell phone when keeping the smart tag or smartcard together by the cell phone's case.

Current approaches for solving these issues are complex. For example, document EP 3 447 875 A1 shows a device for preventing destruction of Near Field Communication (NFC) cards during wireless charging operations, the device comprising: a magnetic field detection circuit, which is configured to measure an intensity of a magnetic field generated by a wireless charging system, a NFC card detection circuit which is configured to detect a presence of a NFC card, and a charging control circuit, which is configured to limit a transmitted power of the wireless charging system during wireless charging operations based on a maximum permitted field, the maximum permitted field being related to the detected presence of the NFC card.

Document US 2018/0183267 A1 describes a wireless power transmitter with protection against damage to NFC devices within range includes a DC/DC converter, a power transmitting controller, an MCU, a switch having two switching ports, a matching unit having two capacitors connected in parallel, and a coil. The DC/DC converter converts a supplied direct current to another level and outputs the direct current before the wireless power transmitter is activated. The converted DC causes one switch port to be conductive, thereby the first capacitor and the coil cooperatively generate a first resonant frequency equal to NFC operating frequency. The power transmitting controller transmits a control signal to the coil which can determine the presence of an NFC device within the wireless charging field. The power transmitting controller is turned off if an NFC device is within the field.

However, the above described situation and problem is not limited to NFC technology but also concerns radio frequency identification (RFID) technologies. Similarly to NFC, RFID is a wireless, contactless data transfer technology that uses tags or cards to store data, that do not need to be powered. Accordingly, an RFID system may generally comprises a tag, a reader, and an antenna.

For example, RFID works by placing a physical tag on an object, such as a truck, this tag using radio waves to send data to a remote reader (e.g., data including location details, delivery time, and more). RFID tags are either active or passive, active RFID tags containing their own power source, whereas passive RFID tags are powered by the received reading radio signal such that no power source is necessary for actively powering the tag. Active tags allow for broadcasting with a read range of up to 100 meters, where the comparatively long read range makes active RFID tags ideal for many industries where asset location and other improvements in logistics are important.

In contrast to NFC technology (allowing for two-way communication), RFID technology is a contactless one-way communication method at varying distances. Contrary to RFID, NFC has a very short range of action, as the general working range is within 0.1 meters. While RFID tags usually require expensive readers to extract data, most modern-day smartphones are fitted with NFC reading capabilities. This greatly reduces the cost of implementing NFC tags, as users can simply use their smartphones to read data. Smartphones can read and write data onto a tag or card, obtain detailed metadata, launch an app or URL when the tag is scanned, and also share data between phones using NFC (peer-to-peer (P2P) communication).

In view of the above described situation, it is desirable to provide an antenna assembly for a smart tag or smartcard, and a smart tag or smartcard with such an antenna assembly, overcoming the above described issues without diminishing user comfort, providing a cost efficient and simple solution to any or all of the above described issues in a broad range of applications and/or technologies.

### Summary of the Disclosure

The issues and problems described in the context of the technological background of the present disclosure are at least partially resolved by an antenna assembly in accordance with claim 1 or 12, and a smart tag or smartcard in accordance with claim 11 or 18. Further advantageous embodiments of the antenna assemblies are defined in the dependent claims 2 to 10 and 13 to 17.

In a first aspect of the present disclosure, an antenna assembly is provided. In illustrative embodiments of the first aspect, the antenna assembly comprises a carrier substrate, an antenna wiring pattern formed on the carrier substrate, wherein the antenna wiring pattern is formed of an antenna loop portion having less than three winding turns, and a tuning capacitor coupled with the antenna wiring pattern so as to tune a resonance frequency of a circuitry formed by the antenna wiring pattern and the tuning capacitor to a desired value. The antenna wiring pattern and at least one electrode of the tuning capacitor may be arranged on the same surface of the carrier substrate. For example, the antenna wiring pattern and the tuning capacitor may be formed on the same surface of the carrier substrate or the antenna wiring pattern and one electrode of the tuning capacitor may be formed on the same surface of the carrier substrate, while another electrode of the tuning capacitor may be formed on an opposite surface of the carrier substrate, both electrodes of the tuning capacitor being separated by the carrier substrate extending between the electrodes of the tuning capacitor. Alternatively, the antenna wiring pattern and the tuning capacitor may be arranged on two opposing surfaces of the carrier substrate.

The antenna assembly of the first aspect may be compatible with any wireless communication technology. The reduced number of winding turns of the antenna wiring pattern allows to reduce an induced current such that exposure of the antenna assembly to a wireless charging environment, typically at low frequency (LF) in the range between 100 kHz and 200 kHz, results in a reduced induced current at LF, thereby avoiding the risk of damaging smart tags or smartcards including such an antenna assembly in exposure to LF charging power radiation as emitted by wireless charging devices. For example, assuming a wireless charging device emitting LF charging power radiation of 15 W in the range between 100 kHz and 200 kHz, an induced voltage at the antenna assembly of considerably less than 16 V, e.g., at 8 V or less, may be obtained, therefore not posing any risk of overcurrent when applying this voltage to a chip element coupled with the antenna assembly in a smart tag or smartcard, for example.

In some illustrative embodiments of the first aspect, the antenna assembly may further comprise a chip element coupled with connection terminals of the antenna wiring pattern via respective chip terminals of the chip element, wherein the tuning capacitor is coupled to the chip element by means of the chip terminals. Accordingly, a functional assembly is easily provided in a repetitive manner.

In some other illustrative embodiments of the first aspect, the antenna wiring pattern may be formed of a planar antenna loop portion formed of spirally wound antenna track line circuitry routed on a surface of the carrier substrate. Accordingly, a compact layout is easily provided, adapted for use in a smart tag or smartcard.

In some other illustrative embodiments of the first aspect, the tuning capacitor may be formed of a capacitive line routing on the carrier substrate, the capacitive line routing forming two separated electrodes of the tuning capacitor. Accordingly, the tuning capacitor may be easily provided with desired characteristics in a repetitive manner with high degree of accuracy.

In some other illustrative embodiments of the first aspect, the capacitive line routing may be formed of electrode sections of the capacitive line routing of both electrodes, which electrode sections of one of the electrodes may be routed in parallel or substantially in parallel to electrode sections of the other one of the electrodes. Accordingly, an inductive component of the capacitive line routing may be easily controlled.

In some other illustrative embodiments of the first aspect, the capacitive line routing may be at least partially routed in shape of a spiral routing. Accordingly, the characteristic of the capacitor may be adjusted with a compact layout. Alternatively, the capacitive line routing may be at least partially routed in shape of a comb routing having intermeshing or engaging finger portions, allowing for a higher degree of freedom in the design of the tuning capacitor.

In a second aspect of the present disclosure, an antenna assembly is provided. In illustrative embodiments of the second aspect, the antenna assembly comprises a carrier substrate, an antenna wiring pattern formed on the carrier substrate, and a high pass filter component, such as a capacitance element, e.g., a capacitor (external element coupled to the antenna wiring pattern or internally formed of a track line routing provided on at least one surface of the carrier substrate) coupled with the antenna wiring pattern. Herein, the high pass filter component may be coupled in series with the antenna wiring pattern. For example, the antenna wiring pattern may comprise at least one antenna loop portion, the at least one loop portion and the high pass filter component being provided on one surface or different surfaces of the carrier substrate, or in one layer or different layers of the carrier substrate. Components of the antenna assembly provided on different surfaces of the carrier substrate may be interconnected by one of more vertical interconnections, e.g., two vertical interconnections, extending through the carrier substrate for interconnecting components provided on different surfaces or in different layers of the carrier substrate.

The antenna assembly of the second aspect may be compatible with any wireless communication technology. The high pass filter component coupled to the antenna wiring pattern allows to suppress LF charging power to which the antenna assembly may be exposed, e.g., LF radiation in the range between 100 kHz and 200 kHz. For example, assuming a wireless charging device emitting LF charging power radiation of 15 W in the range between 100 kHz and 200 kHz, the high pass filter component will block voltage/current induced by LF frequencies at the antenna assembly, therefore not posing any risk of overcurrent when applying this voltage to a chip element coupled with the antenna assembly in a smart tag or smartcard, for example. On the other hand, communication signals to be received by the antenna assembly during its operation, will pass the high pass filter component and allow operation of the antenna assembly without impairment.

In some illustrative embodiments of the second aspect, the antenna wiring pattern may be formed of a planar antenna loop portion, such as an etched or printed antenna loop portion or antenna loop portion formed of a flat wire. The antenna loop portion may be formed of substantially spirally wound antenna track lines routed on a surface of the carrier substrate. Accordingly, a compact layout is easily provided, adapted for use in a smart tag or smartcard.

In some other illustrative embodiments of the second aspect, the antenna track lines may be at least partially routed for the antenna track lines being continuously coupled to one connection terminal provided at one end of the antenna wiring pattern and the high pass filter component being directly connected to another end of the antenna wiring pattern, e.g., the antenna track lines seamlessly merging into the high pass filter component. For example, in case that the antenna assembly further comprises a chip element coupled with at least one connection terminal of the antenna wiring pattern via at least one of chip terminals of the chip element and the high pass filter component comprises a filter capacitor coupled in series with the chip and the antenna wiring pattern, the antenna track lines may be at least partially routed such that each of the antenna track lines coupled to one of the chip terminals have antenna track lines coupled to another one of the chip terminals running along one of its side, while at least two outer winding turns of antenna track lines may be continuously routed and connected to one of the chip terminals. The at least two outer winding turns may adjust an inductive characteristic of the antenna track lines, while antenna track lines connected to one chip terminal and having antenna track lines connected to another chip terminal running along its side, may substantially suppress any inductance and substantially contribute to a capacitive characteristic for adjusting the high pass filter component characteristic of the antenna assembly.

In some other illustrative embodiments of the second aspect, the antenna assembly may further comprise a chip element coupled with at least one connection terminal of the antenna wiring pattern via at least one of chip terminals of the chip element, wherein the high pass filter component comprises a filter capacitor coupled in series with the chip and the antenna wiring pattern. Herein, the filter capacitor may be coupled in between the chip and the antenna wiring pattern. Accordingly, a functional assembly is easily provided in a repetitive manner. For example, the antenna wiring pattern may have a single antenna loop portion with one of its ends connecting to one chip terminal of the chip element and the other one of its ends continuously connecting to the high pass filter component, e.g., an electrode of the high pass filter component. Accordingly, the antenna wiring pattern and this electrode of the high pass filter component are connected in series, while another electrode of the high pass filter component may continuously connect to another chip terminal, thereby the chip element being connected in series with this other one of the electrodes of the high pass filter component.

In some other illustrative embodiments of the second aspect, the filter capacitor may be formed of a capacitive line routing on the carrier substrate, the capacitive line routing forming two separated electrodes of the filter capacitor. Accordingly, the filter capacitor may be easily provided with desired characteristics in a repetitive manner with high degree of accuracy.

In some other illustrative embodiments of the second aspect, the capacitive line routing may be formed of electrode sections of the capacitive line routing of both electrodes, which electrode sections of one of the electrodes may be routed in parallel or substantially in parallel to electrode sections of the other one of the electrodes. Accordingly, the electrode sections of the capacitive routing may substantially suppress any inductance and substantially contribute to a capacitive characteristic for adjusting the high pass filter component characteristic of the antenna assembly.

In some special illustrative examples herein, the electrode sections may provide a strip-shaped electrode portion for each of the electrodes. For example, each electrode may further comprise at least one finger portion continuously formed with and extending away from the strip-shaped electrode portion such that the electrodes are provided in an interleaved arrangement in which the finger portions are engaging or meshing with each other. An according capacitance formed of interleaved finger portions may provide for a good adjustment of a desired capacitance value, the intermeshing finger portions increasing electrode areas at a compact electrode design.

In some other illustrative embodiments of the second aspect, the capacitive line routing may be at least partially routed in shape of a spiral routing. Optionally, the electrode sections of the electrodes may be arranged in parallel sections. Accordingly, a compact capacitive line routing may be provided with a high degree of repeatability.

In some other illustrative embodiments of the second aspect, the capacitive line routing may be at least partially routed in parallel to the antenna track lines, thereby further allowing a more compact layout.

In some other illustrative embodiments of the second aspect, the capacitive line routing of one electrode may be continuously connected to a respective one of the chip terminals of the chip element via the antenna track lines, thereby further allowing a more compact layout with a series connection of antenna wiring pattern and high pass filter component. In some special illustrative example herein, the other electrode may be connected to the other one of the chip terminals via a vertical interconnection formed in the carrier substrate so as to completely extend through the carrier substrate, allowing a higher degree of freedom in designing the high pass filter component by using another surface of the carrier substrate.

In some other illustrative embodiments of the second aspect, capacitive lines of the capacitive line routing may be routed such that each of the capacitive lines of one electrode of the filter capacitor have capacitive lines of the other electrode of the filter capacitor running along one of its sides or the electrodes being formed on opposite surfaces of the carrier substrate interconnected by vertical interconnections extending between end terminals of the capacitive line routing through the carrier substrate. Accordingly, the capacitive line routing may be designed to substantially suppress inductance.

In a third aspect of the present disclosure, a smart tag or smartcard is provided. In illustrative embodiments of the third aspect, the smart tag or smartcard comprises at least one of the antenna assembly of the first aspect and the antenna assembly of the second aspect, wherein the antenna assembly is integrated into a body of the smart tag or smartcard. Accordingly, a smart tag or smartcard may be provided with improved security against exposure to a wireless charging environment.

The smart tag or smartcard of the third aspect may be compatible with any wireless communication technology and avoid the issue of damage caused by exposure to a wireless charging environment. without impairment of the operation of the smart tag or smartcard.

Although antenna assemblies with antenna wiring patterns are described with respect to any of the above aspects of the present disclosure, no limitation of the expression "antenna wiring" is intended. In general, the antenna wiring pattern of any embodiment of the first to third aspects disclosed herein may be provided by an antenna wiring at least partially formed of at least one wire section. However, antenna assemblies being formed by at least one of etching and printing techniques may be considered as well. For example, any of the above described antenna assemblies may be fabricated by using etched aluminum antenna techniques. In general, an antenna may be formed by depositing a conductive material (e.g., copper, aluminum, gold, silver, etc.) on at least one surface of a carrier substrate, either by depositing and patterning (involving lithographic and etching techniques) or patterned depositing (e.g., printing), as an alternative to antenna wiring techniques.

### Brief Description of the Drawings

Various illustrative embodiments and other advantages of the various aspects of the present disclosure will become apparent from the detailed description of the accompanying Figures as presented below.
Figure 1 schematically shows a situation in which an antenna assembly of a smartcard or smart tag is exposed to a wireless charging device.
Figure 2 schematically shows a layout of an antenna assembly in accordance with some illustrative embodiments of the present disclosure.
Figure 3 schematically shows a circuit diagram of the antenna assembly in accordance with illustrative embodiments of the present disclosure as disclosed in the context of Figure 1.
Figure 4 schematically shows a layout of an antenna assembly in accordance with some illustrative examples of the embodiments disclosed in the context of Figures 2 and 3.
Figure 5 schematically shows a circuit diagram of an antenna assembly in accordance with some other illustrative embodiments of the present disclosure.
Figure 6 schematically shows a layout of an antenna assembly in accordance with some illustrative examples of the embodiments disclosed in the context of Figure 5.
Figure 7 schematically shows a layout of an antenna assembly in accordance with some other illustrative examples of the embodiments disclosed in the context of Figure 5.
Figure 8 schematically shows a layout of an antenna assembly in accordance with some other illustrative examples of the embodiments disclosed in the context of Figure 5.
Figure 9 schematically shows a layout of an antenna assembly in accordance with some other illustrative examples of the embodiments disclosed in the context of Figure 5.
Figure 10 schematically shows a layout of an antenna assembly in accordance with some other illustrative examples of the embodiments disclosed in the context of Figure 5.
Figure 11 shows a graphical representation illustrating a characteristic of an antenna assembly in accordance with a comparative example and an antenna assembly in accordance with an embodiment at high frequencies.
Figure 12 shows a graphical representation illustrating a characteristic of an antenna assembly in accordance with a comparative example and an antenna assembly in accordance with an embodiment at low frequencies.
Figure 13 schematically shows an antenna assembly in accordance with some other illustrative examples of the embodiments disclosed in the context of Figure 5.
Figure 14 schematically shows an antenna assembly in accordance with some other illustrative examples of the embodiments disclosed in the context of Figure 5.
Figure 15 schematically shows an antenna assembly in accordance with some other illustrative examples of the embodiments disclosed in the context of Figure 5.
Figure 16 schematically shows a side view of the antenna assembly of Figure 15.
Figure 17 schematically shows an antenna assembly in accordance with some other illustrative examples of the embodiments disclosed in the context of Figure 5.
Figure 18 schematically shows a side view of the antenna assembly of Figure 17.
Figure 19 schematically shows an antenna assembly in accordance with some other illustrative examples of the embodiments disclosed in the context of Figure 5.
Figure 20 schematically shows an antenna assembly in accordance with some other illustrative examples of the embodiments disclosed in the context of Figure 5.
Figure 21 schematically shows a side view of the antenna assembly of Figure 20.

The Figures accompanying the present disclosure are only provided for schematically showing some concepts and aspects of the present disclosure without showing all possible details of certain embodiments and without necessarily being actually to scale.

### Detailed Description of Preferred Embodiments

The illustrative embodiments described below relate to an antenna assembly and a smart tag or smart card including such an antenna assembly in various aspects of the present disclosure. Although embodiments below are described with respect to a smartcard or smart tag, this does not impose any limitation and another type of smart device may be considered in a different field of application instead where an antenna assembly of the smart device adapted for receiving and/or transmitting electromagnetic signals in a first frequency range is exposed to electromagnetic radiation in a second frequency range different from the first frequency range, the electromagnetic radiation having higher (electromagnetic) power (electromagnetic energy flow) than the electromagnetic signals.

In some of the explicitly disclosed embodiments below, the antenna assembly may be provided in accordance with wireless communication technology, while an wireless charging environment may be generated by a wireless charging device complying with the Qi or Ki standard, delivering a maximum power of 5 W (Qi: 5 W (so-called Baseline Power Profile, BPP) to 15 W (so-called Extended Power Profile, EPP) or 30 W (EEP Power Class 0) or up to 65 W or even up to 200 W) up to 1 kW (Ki).

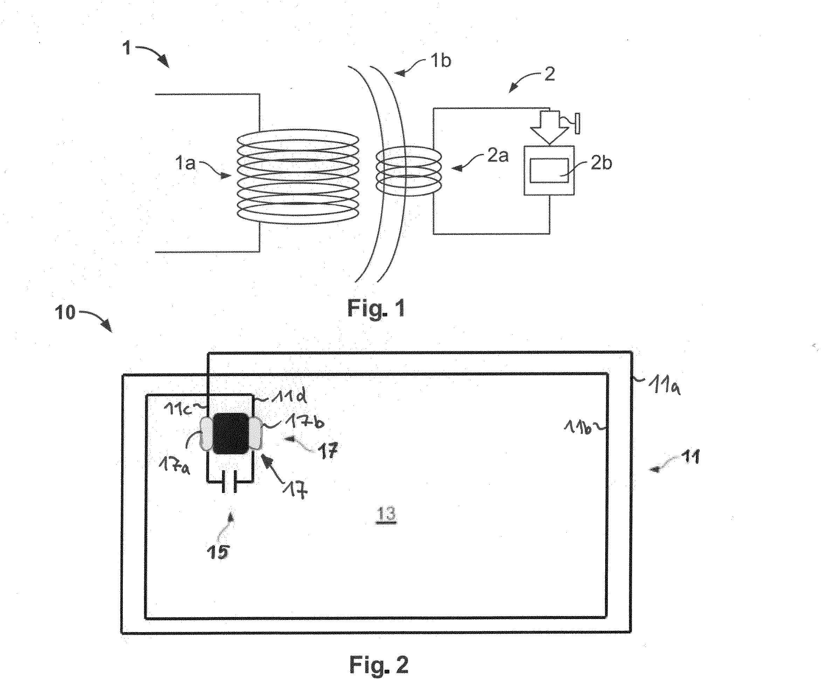

Figure 1 schematically shows a situation in which a wireless charging device 1 electrically couples to an antenna assembly 2 of a smart tag or smart card. The wireless charging device 1 includes a charging transmission antenna 1a generating electromagnetic radiation 1b for wirelessly charging a device (not illustrated) to be charged. In the situation shown in Figure 1, the antenna assembly 2 is exposed to a charging environment generated by the wireless charging device 1, an antenna 2a of the antenna assembly 2 being exposed to the electromagnetic radiation 1b generated by the wireless charging device 1. The electromagnetic radiation 1b induces an electric current I in the antenna assembly 2. The electric current I flows through a chip 2b of the antenna assembly 2, potentially damaging the chip 2b in case that the induced current I exceeds a maximum current load of the chip 2b.

For example, the antenna assembly 2 may be configured as an RFID device, while the wireless charging device 1 may be provided in accordance with the Qi standard, having an output power of 15 W at a transmitted frequency in the range between 100 kHz and 200 kHz. The input in the antenna assembly 2 may be caused by an induced voltage of 16 V, exceeding an allowable maximum current load of the chip 2b. Accordingly, the antenna assembly 2b exposed to the electromagnetic radiation 1b of the wireless charging device 1 bears the high risk of becoming damaged when exposed to the electromagnetic radiation 1b of the wireless charging device 1.

Referring to Figure 2, a layout of an antenna assembly 10 in accordance with some illustrative embodiments of the present disclosure is described. The antenna assembly 10 comprises a carrier substrate 13 and an antenna wiring pattern 11 formed on the carrier substrate 13. The antenna wiring pattern is formed of an antenna loop portion 11a and an antenna loop portion 11b, each of which having one winding turn. Accordingly, the antenna wiring pattern 11 has a total of two winding turns. The antenna wiring pattern 10 further comprises a tuning capacitor 15 coupled with the antenna wiring pattern 11, the antenna wiring pattern 11 and the tuning capacitor 15 being adapted to provide a resonance at a desired resonance frequency.

With ongoing reference to Figure 2, the antenna assembly 10 further comprises a chip element 17 coupled with connection terminals 11c and 11d of the antenna wiring pattern 11 via respective chip terminals 17a and 17b of the chip element 17. The tuning capacitor 15 is coupled to the chip element 17 by means of the chip terminals 17a and 17b. In other words, the tuning capacitor 15, the antenna wiring pattern 11 and the chip element 17 are coupled in parallel. That is, a voltage over the chip element 17 is equal to a voltage over the tuning capacitor 15. In some illustrative examples, the tuning capacitor 15 may be a separate capacitor element mounted on a surface of or coupled to the carrier substrate 13. Alternatively, the tuning capacitor 15 may be formed together with the antenna wiring pattern 11 on a surface of the carrier substrate 13.

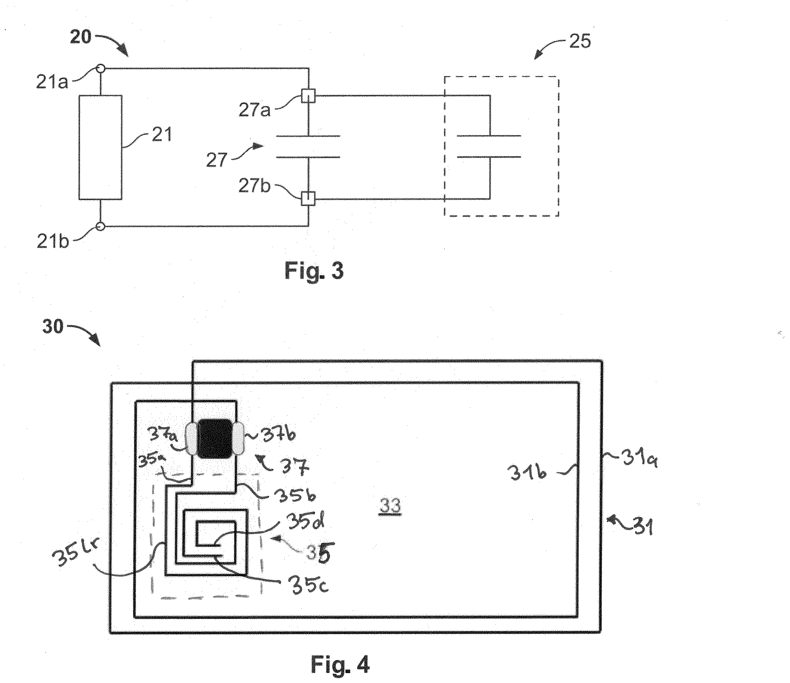

Referring to Figure 3, a circuit diagram of the antenna assembly 10 shown in Figure 2 is schematically illustrated. The circuit diagram in Figure 3 shows an antenna assembly 20 in accordance with the antenna assembly 10 of Figure 2, the antenna assembly 20 having an inductive component 21 in accordance with the antenna wiring pattern 11 in Figure 2, a tuning capacitor 25 in accordance with the tuning capacitor 15 in Figure 2, and a chip element 27 in accordance with the chip element 17 in Figure 2. The inductive component 21 has connection terminals 21a and 21b connected with respective chip terminals 27a and 27b such that the inductive component 21 is arranged in parallel to the chip element 27. The tuning capacitor 25 is connected to the chip terminals 27A and 27B such that the tuning capacitor 25 is arranged in parallel to the chip element 27.

The inductive component 21 of Figure 3 and the antenna wiring pattern 11 of Figure 2 have a reduced number of winding turns leading to a reduced induced current in the antenna assembly 10 or 20 of Figures 2 and 3. The tuning capacitor 25 is configured to compensate for a detuning in the antenna assembly 10 or 20 caused by the reduced number of winding turns in the antenna assembly 10 or 20 as opposed to the antenna assembly 2 discussed in the context of Figure 1 above.

For example, replacing the antenna assembly 2 by the antenna assembly 10 or 20 as disclosed above, the reduced number of winding turns leads to a reduced induced voltage over the chip element 17 and 27, respectively, thereby resulting in a reduced induced current as opposed to the current I discussed above in the context of the antenna assembly 2 in Figure 1.

Referring to Figure 4, an antenna assembly 30 is schematically shown. The antenna assembly 30 comprises a carrier substrate 33, an antenna wiring pattern 31 having antenna loop portions 31A and 31B coupled to a chip element 37 via respective chip terminals 37a and 37b. A tuning capacitor 35 is coupled with the antenna wiring pattern 31 of the antenna assembly 30 so as to tune a resonance frequency of a circuitry formed by the antenna wiring pattern 31 and the tuning capacitor 35 via the chip element 37 to a desired value. The tuning capacitor 35 is coupled with the chip element 37 by respective coupling terminals 35a and 35b of the tuning capacitor 35 with the chip terminals 37a and 37b of the chip element. Accordingly, the tuning capacitor 35 corresponds to the tuning capacitor 25 shown in Figure 2, representing a specific but non-limiting example of the tuning capacitor 25 of Figure 3 as is indicated by the boxes of dashed lines in Figures 3 and 4.

With ongoing reference to Figure 4, the tuning capacitor 35 is formed of a capacitive line routing 35lr provided on the carrier substrate 33, the capacitive line routing 35lr forming two separate electrodes 35c and 35d of the tuning capacitor 35. As shown in Figure 4, the capacitive line routing 35lr may be formed of electrode sections of the capacitive line routing 25lr of the electrodes 35c and 35d. The electrode sections (e.g., linear line sections as shown in the schematic illustration of Figure 4, optionally curved or including at least one curved portion in alternative examples herein) of one of the electrodes 35c and 35D may be routed in parallel or substantially in parallel to electrode sections of the other one of the electrodes 35C and 35D. In other words, electrode sections extending away from the terminal 35A towards the electrode 35C are at least partially routed in parallel to electrode sections extending away from the terminal 35B towards the electrode 35D.

As shown in Figure 4, the electrode sections of the tuning capacitor 35 may be routed at least partially in shape of a spiral or in a meander pattern. This does not impose any limitation on the present disclosure and a zigzag routing or other routing as appropriate for implementing a specific capacitance value of the tuning capacitor 35, may be chosen.

In any of the antenna assemblies 10, 20, 30 antenna wiring patterns may be formed of planar antenna loop portions formed of a spirally wound antenna track line circuitry routed on a surface of the carrier substrate. The antenna wiring patterns may be formed by screen printing on a substrate representing the carrier substrate or etching a conductive material layer formed on a surface of the substrate representing the carrier substrate, e.g. by lithographical techniques, and the like. Similarly, the tuning capacitor 35 shown in Figure 4 may be formed in accordance with techniques of providing the antenna wiring pattern of the antenna assembly 30, e.g. by screen printing or etching or the like.

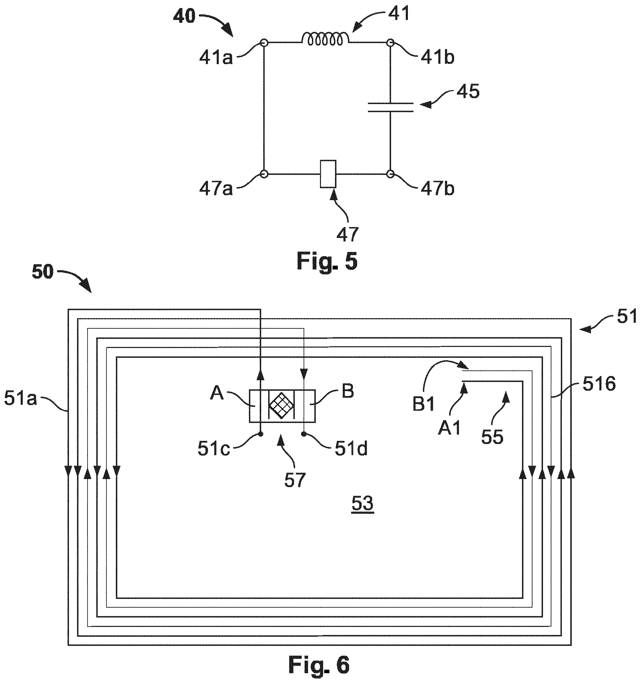

Referring to Figure 5, a circuit diagram of an antenna assembly 40 in accordance with some other illustrative embodiments is schematically illustrated. The circuit diagram of the antenna assembly 40 comprises an inductive component 41, e.g., an antenna such as an antenna wiring pattern, a high pass filter component 45, and a chip element 47. The inductive component 41 has connection terminals 41a and 41b connected with respective chip terminals 47a and 47b. The connection terminals 41a and 41b of the inductive component 41 may be provided at ends of the inductive component 41. The high pass filter component 45 is connected in series between the inductive component 41 and the chip element 47, e.g., the high pass filter component 45 being connected in between the connection terminal 41b and the chip terminal 47b. This does not impose any limitation and the high pass filter component 45 being connected in between the connection terminal 41a and the chip terminal 47a instead. In the simplest case, as illustrated in Figure 5, the high pass filter component 45 may comprise a capacitor element, an optional resistive element (not illustrated) coupled in parallel to the inductive component 41 optionally being given by an Ohmic resistance of the chip element 47, e.g., an effective Ohmic resistance (not illustrated) internal of the chip element 47. Accordingly, low frequency radiation possibly received by the inductive component 41, is suppressed by the high pass filter component 45, thereby preventing appliance of an electric current induced by the low frequency radiation in the antenna assembly 40 at the chip element 47. In this sense, the antenna assembly 40 provides a solution of protecting an antenna assembly using a high pass filter in the antenna assembly 40, the high pass filter comprising the high pass filter component 45 which is connected in series with the inductive component 41 of the antenna assembly 40. This solution is an alternative to the solution of reducing the winding turns as discussed above in the context of the disclosure to Figures 2 to 4.

In some illustrative embodiments herein, the high pass filter component 45 may comprise a filter capacitor of at most 85 pF or 80 pF. For example, the high pass filter component 45 may have a capacitance in a range from about 1 pF to about 50 pF. An according high pass filter component 45 is advantageous in combination with a chip element having a chip capacitance in a range from about 17 pF to about 78n pF. It is noted that the high pass filter component 45 is tuned in view of a high capacitance supporting good performance of the inductive component but deteriorating a high pass filter performance, while a low capacitance supports a good high pass filter performance but deteriorates performance of the inductive component such that a balancing of the antenna assembly 40 with respect to good antenna performance and good low frequency suppression is taken into account in any of the embodiments of the disclosure described below.

Referring to Figure 6, an antenna assembly 50 in accordance with some illustrative embodiments of the antenna assembly shown in Figure 5 is depicted. The antenna assembly 50 comprises a carrier substrate 53, an antenna wiring pattern 51 formed on the carrier substrate 53, and a high pass filter component 55 coupled with the antenna wiring pattern 51.

In accordance with some illustrative but non-limiting examples herein, the antenna wiring pattern 51 may be formed of a planar antenna loop portion 51a and a planar antenna loop portion 51b, each of which being formed of substantially spirally wound antenna track lines routed on a surface of the carrier substrate 53. For example, the antenna loop portion 51a may be coupled to a chip terminal A of a chip element 57, while the antenna loop portion 51b may be coupled with another chip terminal B of the chip element 57. For example, the antenna loop portion 51a may have a connection terminal provided at its end 51c, while the antenna loop portion 51b may have a connection terminal provided at its end 51d such that the chip element 57 is coupled with antenna loop portions 51a and 51b of the antenna wiring pattern 51 via the connection terminals at the ends 51c and 51d of the antenna wiring pattern 51, while the antenna wiring pattern 51 is connected to the high pass filter component 55 at the opposite ends of the antenna loop portions 51a and 51b. The antenna loop portion 51a continuously connects with the high pass filter component 55 such that an electrode A1 of the high pass filter component 55 is continuously connected with the antenna loop portion 51a at the opposite end of the antenna loop portion 51a relative to the end 51c. Similarly, the antenna loop portion 51b continuously connects with the high pass filter component 55 such that an electrode B1 of the high pass filter component 55 is continuously connected with the antenna loop portion 51b at the opposite end of the antenna loop portion 51b relative to the end 51d. The electrodes A1 and B1 of the high pass filter component 55 represent a filter capacitor coupled in series in between the antenna loop portions 51a and 51b and the chip element 57.

In the illustration of Figure 6, oriented lines of the antenna loop portions 51a and 51b with arrows are intended for ease of illustration only, facilitating the identification of lines of the antenna loop portions 51a and 51b as oppositely oriented lines in the illustration of Figure 6. No limitation is intended by the depicted arrows in Figure 6.

With ongoing reference to Figure 6, outer winding turns of the antenna wiring pattern 51 are only provided by turns of the antenna loop portion 51a, while inner winding turns of the antenna wiring pattern 51 are formed by successively winding turns of both antenna loop portions 51a and 51b in an alternating manner. For example, following the outer two winding turns of the antenna loop portions 51a, an inner winding turn of the antenna loop portion 51b is provided, followed internally by a more inner winding turn of the antenna loop portion 51b etc. until an innermost winding turn (in the illustration of Figure 6, an innermost winding turn of the antenna loop portion 51a) is provided. Accordingly, a winding turn of one particular winding orientation is inside and outside enclosed by oppositely oriented winding orientations, thereby leaving an effective winding turn number, e.g., a reduced winding turn number of at most two in some optional cases, given by the outermost winding turns of the antenna loop portion 51a in the illustration of Figure 6. For example, the antenna wiring pattern 51 is formed of antenna track lines which are at least partially routed such that each of the antenna track lines coupled to one of the chip terminals A and B have antenna track lines coupled to the other chip terminal running along one of its side.

This does not impose any limitation and the number of outermost winding turns is not limited to two winding turns, but may be any number greater than two winding turns, and/or the outermost winding turns may be provided by the antenna loop portion 51b instead of the antenna loop portion 51a. Accordingly, the antenna assembly 50 shown in Figure 6 corresponds to the layout shown in Figure 5,where the inductive component 41 in Figure 5 corresponds to the outermost winding turns of the antenna loop portion 51a in Figure 6, while the high pass filter component 45 in Figure 5 corresponds to the filter capacitor formed by the electrodes A1 and B1 in Figure 6.

Referring to the high pass filter component 55 in Figure 6, the filter capacitor provided by the electrodes A1 and B1 may be formed of a capacitive line routing on the carrier substrate 53, the capacitive line routing forming the two separated electrodes A1 and B1 of the filter capacitor. For example, the capacitive line routing is formed of electrode sections of the capacitive line routing of both electrodes A1 and B1. These electrode sections may be linear line sections composing the electrodes A1 and B1 and continuously coupling to the antenna loop portions 51a and 51b. The electrode sections of the electrodes A1 and B1 may be routed in parallel or substantially in parallel to each other. Furthermore, the capacitive line routing of the high pass filter component 55 may be at least partially routed in parallel to the antenna track lines of the antenna loop portions 51a and 51b.

With ongoing reference to Figure 6, the capacitive line routing of each electrode A1 and B1 of the high pass filter component 55 is continuously connected to a respective one of the chip terminals A and B of the chip element 57 via respective ones of the antenna track lines of the antenna wiring pattern 51. For example, the electrodes A1 and B1 of the high pass filter component 55 may be composed each of a plurality of capacitive lines which are routed such that each of the capacitive lines of electrode A1 has one or more capacitive lines of the electrode B1 running along one of its sides.

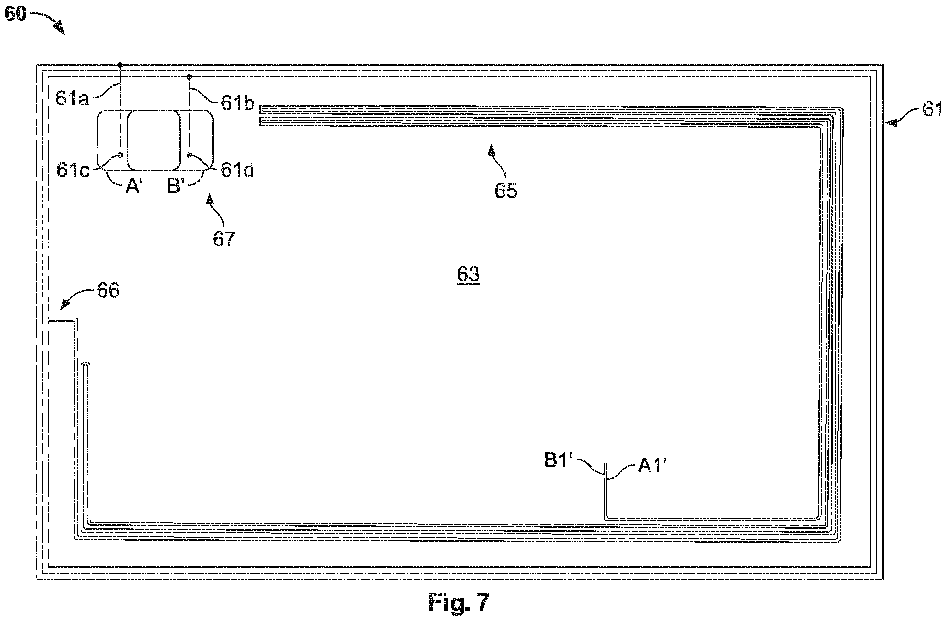

Referring to Figure 7, an antenna assembly 60 in accordance with some illustrative embodiments of the antenna assembly shown in Figure 5 is depicted. The antenna assembly 60 comprises a carrier substrate 63, an antenna wiring pattern 61 formed on the carrier substrate 63, and a high pass filter component 65 coupled with the antenna wiring pattern 61.

In accordance with some illustrative but non-limiting examples herein, the antenna wiring pattern 61 may be formed of a planar antenna loop portion 61a and a planar antenna loop portion 61b, each of which being formed of substantially spirally wound antenna track lines routed on a surface of the carrier substrate 63. For example, the antenna loop portion 61a may be coupled to a chip terminal A' of a chip element 67, while the antenna loop portion 61b may be coupled with another chip terminal B' of the chip element 67. For example, the antenna loop portion 61a may have a connection terminal provided at its end 61c, while the antenna loop portion 61b may have a connection terminal provided at its end 61d such that the chip element 67 is coupled with antenna loop portions 61a and 61b of the antenna wiring pattern 61 via the connection terminals at the ends 61c and 61d of the antenna wiring pattern 61. The antenna wiring pattern 61 is connected to the high pass filter component 65 at the opposite ends of the antenna loop portions 61a and 61b. The antenna loop portion 61a continuously connects with the high pass filter component 65 such that an electrode A1' of the high pass filter component 65 is continuously connected with the antenna loop portion 61a at the opposite end of the antenna loop portion 61a relative to the end 61c. Similarly, the antenna loop portion 61b continuously connects with the high pass filter component 65 such that an electrode B1' of the high pass filter component 65 is continuously connected with the antenna loop portion 61b at the opposite end of the antenna loop portion 61b relative to the end 61d. The electrodes A1' and B1' of the high pass filter component 65 represent a filter capacitor coupled in series in between the antenna loop portions 61a and 61b and the chip element 67.

In the illustration of Figure 7, antenna loop portions 61a and 61b may be considered as indicated with orientation arrows corresponding to the illustration of the orientation arrows in Figure 6.

With ongoing reference to Figure 7, a plurality (e.g., more than two) of outer winding turns of the antenna wiring pattern 61 are only provided by turns of the antenna loop portion 61a, while inner winding turns of the antenna wiring pattern 61 are formed by successively winding turns of both antenna loop portions 61a and 61b in an alternating manner. For example, following the plurality of outer winding turns of the antenna loop portions 61a, an inner winding turn of the antenna loop portion 61b may be provided, followed internally by a more inner winding turn of the antenna loop portion 61b etc. until an innermost winding turn is provided.

Accordingly, the antenna assembly 60 shown in Figure 7 corresponds to the layout shown in Figure 5,where the inductive component 41 in Figure 5 corresponds to the outermost winding turns of the antenna loop portion 61a in Figure 7, while the high pass filter component 45 in Figure 5 corresponds to the filter capacitor formed by the electrodes A1' and B1' in Figure 7.

Referring to the high pass filter component 65 in Figure 7, the filter capacitor provided by the electrodes A1' and B1' may be formed of a capacitive line routing on the carrier substrate 53, the capacitive line routing forming the two separated electrodes A1' and B1' of the filter capacitor composed of a composition of capacitive line sections or electrode sections which provide the capacitive line routing of the filter capacitor. For example, the capacitive line routing may be formed of electrode sections of the capacitive line routing of both electrodes A1' and B1' extending in a meander and/or spirally routed shape, optionally with corners and/or curves (not illustrated). In other words, these electrode sections may be linear line sections composing the electrodes A1' and B1' in a more complex course of line routing branching of at a connection point 66 from the antenna wiring pattern 61 and extending within an inner surface portion encircled by the antenna wiring pattern 61. These linear line sections may be continuously coupled to the antenna loop portions 61a and 61b at the connection point 66. The electrode sections of the electrodes A1' and B1' are in each section routed in parallel to each other. Furthermore, the capacitive line routing of the high pass filter component 65 may be at least partially routed in parallel to the antenna track lines of the antenna loop portions 61a and 61b but separated by a distance of at least a width dimension of the capacitive line routing, that is the width dimension measured perpendicular to a direction along which each linear line section longitudinally extends.

With ongoing reference to Figure 7, the capacitive line routing of each electrode A1' and B1' of the high pass filter component 65 is continuously connected to a respective one of the chip terminals A' and B' of the chip element 67 via respective ones of the antenna track lines of the antenna wiring pattern 61 at the point 66. For example, the electrodes A1' and B1' of the high pass filter component 65 may be composed each of a plurality of capacitive lines which are routed such that each of the capacitive lines of electrode A1' has one or more of the capacitive lines of the electrode B1' running along at least one of its sides.

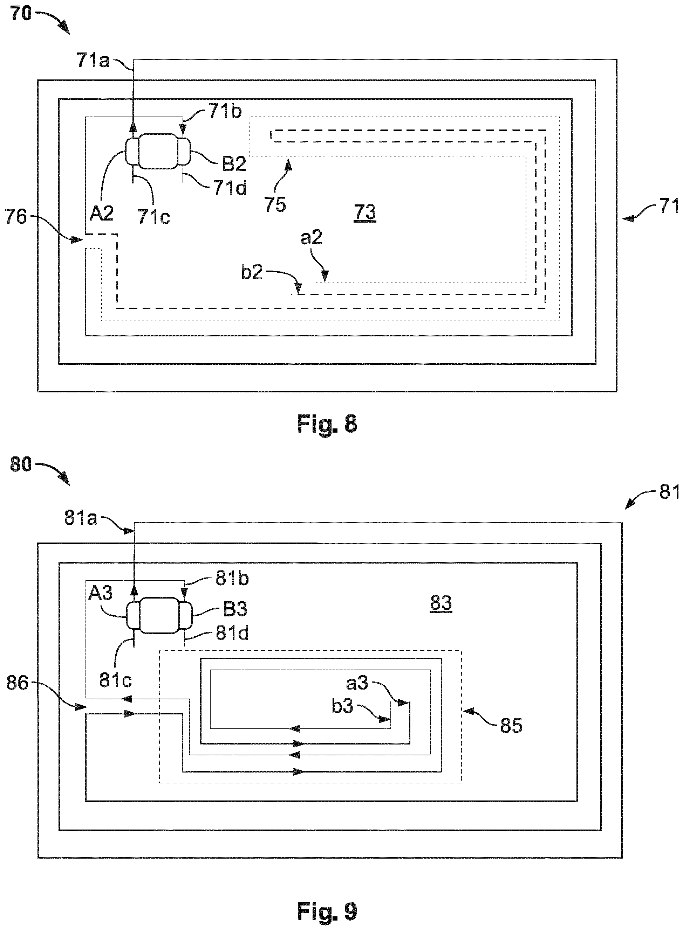

Referring to Figure 8, an antenna assembly 70 in accordance with some illustrative embodiments of the antenna assembly shown in Figure 5 is depicted. The antenna assembly 70 comprises a carrier substrate 73, an antenna wiring pattern 71 formed on the carrier substrate 73, and a high pass filter component 75 coupled with the antenna wiring pattern 71.

In accordance with some illustrative but non-limiting examples herein, the antenna wiring pattern 71 may be formed of a planar antenna loop portion 71a and a planar antenna loop portion 71b, the antenna loop portion 71a being formed of substantially spirally wound antenna track lines or antenna loops routed on a surface of the carrier substrate 73. The antenna loop portion 71b is only formed by a partial or incomplete loop portion. For example, the antenna loop portion 71a may be coupled to a chip terminal A2 of a chip element 77, while the antenna loop portion 71b may be coupled with another chip terminal B2 of the chip element 77. For example, the antenna loop portion 71a may have a connection terminal provided at its end 71c, while the antenna loop portion 71b may have a connection terminal provided at its end 71d such that the chip element 77 is coupled with antenna loop portions 71a and 71b of the antenna wiring pattern 71 via the connection terminals at the ends 71c and 71d of the antenna wiring pattern 71. The antenna wiring pattern 71 is connected to the high pass filter component 75 at the opposite ends of the antenna loop portions 71a and 71b. The antenna loop portion 71a continuously connects with the high pass filter component 75 such that an electrode a2 of the high pass filter component 75 is continuously connected with the antenna loop portion 71a at the opposite end of the antenna loop portion 71a relative to the end 71c. Similarly, the antenna loop portion 71b continuously connects with the high pass filter component 75 such that an electrode b2 of the high pass filter component 75 is continuously connected with the antenna loop portion 71b at the opposite end of the antenna loop portion 71b relative to the end 71d. The electrodes a2 and b2 of the high pass filter component 75 represent a filter capacitor coupled in series in between the antenna loop portions 71a and 71b and the chip element 77.

With ongoing reference to Figure 8, a plurality (e.g., more than one) of outer winding turns of the antenna wiring pattern 71 are only provided by turns of the antenna loop portion 71a, while the innermost winding turn represented by the innermost antenna loop provided by the antenna loop portion 71a encircles the high pass filter component 75.

Accordingly, the antenna assembly 70 shown in Figure 8 corresponds to the layout shown in Figure 5,where the inductive component 41 in Figure 5 corresponds to the antenna loop portion 71a in Figure 8, while the high pass filter component 45 in Figure 5 corresponds to the filter capacitor formed by the electrodes a2 and b2 of the high pass filter component 75 shown in Figure 8.

Referring to the high pass filter component 75 in Figure 8, the filter capacitor provided by the electrodes a2 and b2 may be formed of a capacitive line routing on the carrier substrate 73, the capacitive line routing forming the two separated electrodes a2 and b2 of the filter capacitor composed of a composition of capacitive line sections or electrode sections which provide the capacitive line routing of the filter capacitor. For example, the capacitive line routing may be formed of electrode sections of the capacitive line routing of both electrodes a2 and b2 extending in section-wise in parallel to each other, optionally with corners and/or curves (not illustrated). In other words, these electrode sections may be linear line sections composing the electrodes a2 and b2 when branching of at a connection point 76 from the antenna wiring pattern 71 and extending within an inner surface portion encircled by the antenna wiring pattern 71, i.e., the antenna loop portion 71a. These linear line sections may be continuously coupled to the antenna loop portions 71a and 71b at the connection point 66. The electrode sections of the electrodes a2 and b2 are in each section routed in parallel to each other. Furthermore, the capacitive line routing of the high pass filter component 75 may be at least partially routed in parallel to the antenna track lines of the antenna loop portions 71a and 71b but separated by a distance of at least a width dimension of the capacitive line routing, that is the width dimension measured perpendicular to a direction along which each linear line section longitudinally extends. In some illustrative but non-limiting examples herein, a line pitch of the capacitive line routing may be equal to or higher than a line pitch of the antenna loop portion 71a.

With ongoing reference to Figure 8, the capacitive line routing of each electrode a2 and b2 of the high pass filter component 75 is continuously connected to a respective one of the chip terminals A2 and B2 of the chip element 77 via respective ones of the antenna track lines of the antenna wiring pattern 71 at the point 76. For example, the electrodes a2 and b2 of the high pass filter component 75 may be composed each of a plurality of capacitive lines which are routed such that the capacitive lines of electrode b2 are partially encircled by the capacitive lines of the electrode b2 along a part of the capacitive line routing of the high pass filter component 75. In other words, the capacitive lines of the electrode a2 may run partially along two opposite sides of the capacitive lines of the electrode b2.

In accordance with illustrative embodiments herein, the capacitive line routing of the high pass filter component 75 may be routed adjacent the innermost antenna loop of the antenna loop portion 71a such that the capacitive line routing extends along and follows the course of the innermost loop in a strip-like fashion. Accordingly, the capacitive line routing leaves an inner central surface portion of the carrier substrate 72 free, that is the inner central surface portion surrounded by the antenna wiring pattern 71 and the conductive line routing of the high pass filter component 75 is left free and is available in the antenna assembly 70.

Referring to Figure 9, an antenna assembly 80 in accordance with some illustrative embodiments of the antenna assembly shown in Figure 5 is depicted. The antenna assembly 80 comprises a carrier substrate 83, an antenna wiring pattern 81 formed on the carrier substrate 83, and a high pass filter component 85 coupled with the antenna wiring pattern 81.

In accordance with some illustrative but non-limiting examples herein, the antenna wiring pattern 81 may be formed of a planar antenna loop portion 81a and a planar antenna loop portion 81b, the antenna loop portion 81a being formed of substantially spirally wound antenna track lines or antenna loops routed on a surface of the carrier substrate 83. The antenna loop portion 81b is only formed by a partial or incomplete loop portion. For example, the antenna loop portion 81a may be coupled to a chip terminal A3 of a chip element 87, while the antenna loop portion 81b may be coupled with another chip terminal B3 of the chip element 87. For example, the antenna loop portion 81a may have a connection terminal provided at its end 81c, while the antenna loop portion 81b may have a connection terminal provided at its end 81d such that the chip element 87 is coupled with antenna loop portions 81a and 81b of the antenna wiring pattern 81 via the connection terminals at the ends 81c and 81d of the antenna wiring pattern 81. The antenna wiring pattern 81 is connected to the high pass filter component 85 at the opposite ends of the antenna loop portions 81a and 81b. The antenna loop portion 81a continuously connects with the high pass filter component 85 such that an electrode a3 of the high pass filter component 85 is continuously connected with the antenna loop portion 81a at the opposite end of the antenna loop portion 81a relative to the end 81c. Similarly, the antenna loop portion 81b continuously connects with the high pass filter component 85 such that an electrode b3 of the high pass filter component 85 is continuously connected with the antenna loop portion 81b at the opposite end of the antenna loop portion 81b relative to the end 81d. The electrodes a3 and b3 of the high pass filter component 85 represent a filter capacitor coupled in series in between the antenna loop portions 81a and 81b and the chip element 87.

With ongoing reference to Figure 9, a plurality (e.g., more than one) of outer winding turns of the antenna wiring pattern 81 are only provided by turns of the antenna loop portion 81a, while the innermost winding turn represented by the innermost antenna loop provided by the antenna loop portion 81a encircles the high pass filter component 85.

Accordingly, the antenna assembly 80 shown in Figure 9 corresponds to the layout shown in Figure 5,where the inductive component 41 in Figure 5 corresponds to the antenna loop portion 81a in Figure 9, while the high pass filter component 45 in Figure 5 corresponds to the filter capacitor formed by the electrodes a3 and b3 of the high pass filter component 85 shown in Figure 9.

Referring to the high pass filter component 85 in Figure 9, the filter capacitor provided by the electrodes a3 and b3 may be formed of a capacitive line routing on the carrier substrate 83, the capacitive line routing forming the two separated electrodes a3 and b3 of the filter capacitor composed of a composition of capacitive line sections or electrode sections which provide the capacitive line routing of the filter capacitor. For example, the capacitive line routing may be formed of electrode sections of the capacitive line routing of both electrodes a3 and b3 extending in section-wise in parallel to each other, optionally with corners and/or curves (not illustrated). In other words, these electrode sections may be linear line sections composing the electrodes a3 and b3 when branching of at a connection point 86 from the antenna wiring pattern 81 and extending within an inner surface portion encircled by the antenna wiring pattern 81, i.e., the antenna loop portion 81a. These linear line sections may be continuously coupled to the antenna loop portions 81a and 81b at the connection point 66. The electrode sections of the electrodes a3 and b3 are in each section routed in parallel to each other. Furthermore, the capacitive line routing of the high pass filter component 85 may be at least partially routed in parallel to the antenna track lines of the antenna loop portions 81a and 81b but separated by a distance of at least a width dimension of the capacitive line routing, that is the width dimension measured perpendicular to a direction along which each linear line section longitudinally extends. In some illustrative but non-limiting examples herein, a line pitch of the capacitive line routing may be equal to or higher than a line pitch of the antenna loop portion 81a.

With ongoing reference to Figure 9, the capacitive line routing of each electrode a3 and b3 of the high pass filter component 85 is continuously connected to a respective one of the chip terminals A3 and B3 of the chip element 87 via respective ones of the antenna track lines of the antenna wiring pattern 81 at the point 86. For example, the electrodes a3 and b3 of the high pass filter component 85 may be composed each of a plurality of capacitive lines which are routed such that the capacitive lines of electrode a3 are routed in a spiral shape and the capacitive lines of the electrode b3 are routed in a spiral shape which interlocks or intermeshes with the spiral shape fo the electrode a3, the capacitive lines of the electrodes a3 and b3 running substantially in parallel in the capacitive line routing. Accordingly, the high pass filter component 85 may be provided as a compact capacitor structure arranged in an inner central surface portion encircled by the antenna loop portion 81a.

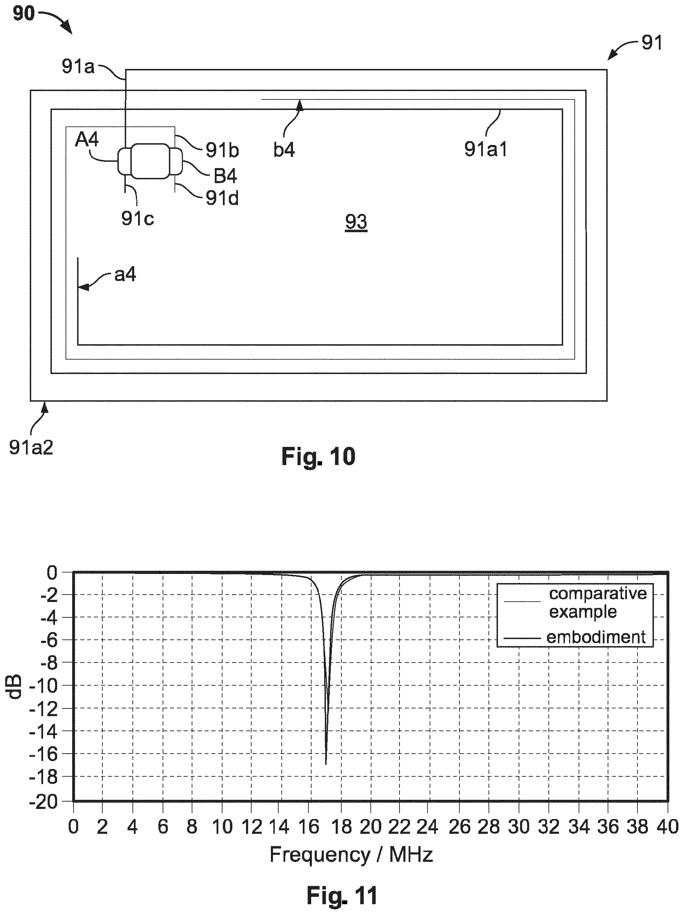

Referring to Figure 10, an antenna assembly 90 in accordance with some illustrative embodiments of the antenna assembly shown in Figure 5 is depicted. The antenna assembly 90 comprises a carrier substrate 93, an antenna wiring pattern 91 formed on the carrier substrate 93, and a high pass filter component coupled with the antenna wiring pattern 91.

In accordance with some illustrative but non-limiting examples herein, the antenna wiring pattern 91 may be formed of a planar antenna loop portion 91a and a planar antenna loop portion 91b, the antenna loop portion 91a being formed of substantially spirally wound antenna track lines or antenna loops routed on a surface of the carrier substrate 93, whereas the antenna loop portion 91b is only formed by a partial or incomplete loop portion. For example, the antenna loop portion 91a may be coupled to a chip terminal A4 of a chip element 97, while the antenna loop portion 91b may be coupled with another chip terminal B4 of the chip element 97. For example, the antenna loop portion 91a may have a connection terminal provided at its end 91c, while the antenna loop portion 91b may have a connection terminal provided at its end 91d such that the chip element 97 is coupled with antenna loop portions 91a and 91b of the antenna wiring pattern 91 via the connection terminals at the ends 91c and 91d of the antenna wiring pattern 91, while the antenna wiring pattern 91 is connected to the high pass filter component at the opposite ends of the antenna loop portions 91a and 91b. The antenna loop portion 91a continuously connects with the high pass filter component such that an electrode a4 of the high pass filter component is continuously connected with the antenna loop portion 91a at the opposite end of the antenna loop portion 91a relative to the end 91c. The antenna loop portion 91b continuously connects with the high pass filter component such that an electrode b4 of the high pass filter component implements a loop of the antenna loop portion 91b, that is the innermost antenna loop of the antenna loop portion 91b forms the electrode a4 of the high pass filter component, as well. Herein, the antenna loop portion 91b is the electrode a4 extending along the antenna loop portion 91b at an inner side of the antenna wiring pattern, while an antenna loop of the antenna loop portion 91 extends along the antenna loop portion 91b at an outer side of the antenna loop portion 91b. As described above in the context of Figure 5, the electrodes a4 and b4 of the high pass filter component represent a filter capacitor coupled in series in between the antenna loop portion 91a and the chip terminal B4.

In the illustration of Figure 10, the high pass filter component is implemented by the antenna wiring pattern 91b being comprised of a partial antenna loop which is laterally enclosed by an antenna loop of the antenna loop portion 91a and the electrode a4 of the high pass filter component, thereby providing a capacitance structure for the high pass filter component formed in an easy manner which allows to define a capacitance value by length and pitch parameters of the antenna assembly 90 in dependence on parameters defined by the antenna wiring pattern 91 on the carrier substrate 93.

The antenna assembly 90 shown in Figure 10 may represent a variant of the antenna assembly 50 described above in the context of Figure 6. In view of Figure 5, the antenna assembly 90 corresponds to the layout shown in Figure 5 in that the inductive component 41 in Figure 5 corresponds to the outermost winding turns of the antenna loop portion 91a in Figure 10, while the high pass filter component 45 in Figure 5 corresponds to the high pass filter component formed by the electrodes a4 and b4 in Figure 10.

Similarly to the high pass filter component in Figure 6, the high pass filter component of the antenna assembly 90 and provided by the electrodes a4 and b4 may be formed of a capacitive line routing on the carrier substrate 93, the capacitive line routing forming the two separated electrodes a4 and b4. For example, the capacitive line routing is formed of electrode sections of the capacitive line routing of both electrodes a4 and b4. These electrode sections may be linear line sections composing the electrodes a4 and b4 and continuously coupling to the chip terminals 91c and 91d via the antenna loop portion 91a and 91b. The electrode sections of the electrodes a4 and b4 may be routed in parallel or substantially in parallel to each other. Furthermore, the capacitive line routing of the high pass filter component may be at least partially routed substantially in parallel to the antenna track lines of the antenna loop portion 91a.

With ongoing reference to Figure 10, the capacitive line routing of each electrode a4 and b4 of the high pass filter component is continuously connected to a respective one of the chip terminals A4 and B4 of the chip element 97 via respective ones of the antenna track lines of the antenna wiring pattern 91. For example, the electrodes a4 and b4 of the high pass filter component may be composed each of a plurality of capacitive lines which are routed such that each of the capacitive lines of electrode a4 has one or more capacitive lines of the electrode b4 running along one of its sides.

Although antenna assemblies with antenna wiring patterns are described, no limitation of the expression "antenna wiring" is intended. In general, the antenna wiring pattern of any embodiment described herein may be provided by an antenna wiring. However, antenna assemblies being formed by at least one of etching and printing techniques may be considered as well. For example, any of the above described antenna assemblies may be fabricated by using etched Aluminum antenna techniques. In general, an antenna may be formed by depositing a conductive material (e.g., copper, aluminum, gold, silver, etc.) on at least one surface of a carrier substrate, either by depositing and patterning (involving lithographic and etching techniques) or patterned depositing (e.g., printing), as an alternative to antenna wiring techniques. Herein, antenna loop portion(s) and high pass filter components may be provided on the same or different surfaces or layers of a carrier substrate, where components of the antenna assembly provided on different surfaces of the carrier substrate may be interconnected by vertical interconnections extending through the carrier substrate for interconnecting components provided on different surfaces or layers of the carrier substrate.

In the above described embodiments, the antenna loop portion(s) and/or the high pass filter component may be formed by line routings having a pitch in a range from about 100 µm to 300 µm, e.g., 200 µm to 250 µm, such as 220 µm. Additionally or alternatively, an inductive component of the antenna assembly may have at least one turn, e.g., a plurality of turns such as two or more turns. In a special but non-limiting example herein, at least three or four or five turns may be provided.

Referring to Figure 11, a graphical representation of an antenna assembly in accordance with one embodiment of the above described disclosure is presented in comparison with an antenna assembly of an comparative example from the art. The graphical representation in Figure 11 shows a frequency along the x-axis of the graphical representation in Figure 11 plotted against a transmission signal strength, showing a resonance of both antenna assemblies at 17 MHz. Accordingly, both antenna assemblies show a good signal reception behavior at high frequencies around 17 MHz.

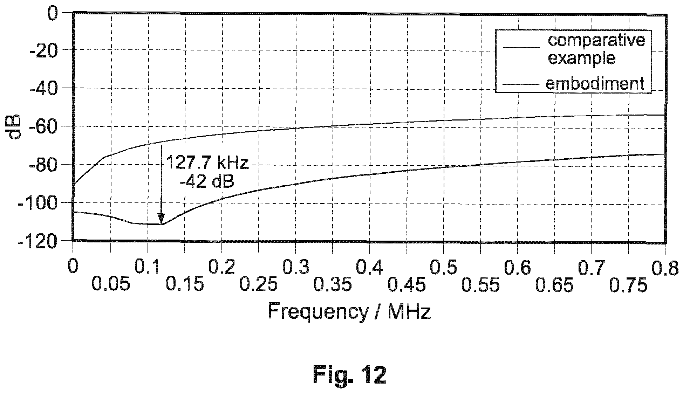

Referring to Figure 12, a graphical representation of the antenna assembly in accordance with the embodiment evaluated in Figure 11 is presented in comparison with the antenna assembly of the comparative example from the art. The graphical representation in Figure 12 shows a signal suppression for low frequencies below 800 kHz where the responsiveness of the antenna assembly in accordance with the embodiment is suppressed by more than 10dB in the low frequency range as compared to the comparative example. Particularly at 127.7 kHz, a suppression of signal responsiveness of the antenna assembly in accordance with the embodiment by 42 dB when compared to the comparative example is achieved.

Accordingly, Figures 11 and 12 show that the antenna assembly in accordance with the embodiment compared to antenna assembly in accordance with the comparative example has comparable signal responsive for high frequencies but achieves good suppression of responsiveness for low frequencies.

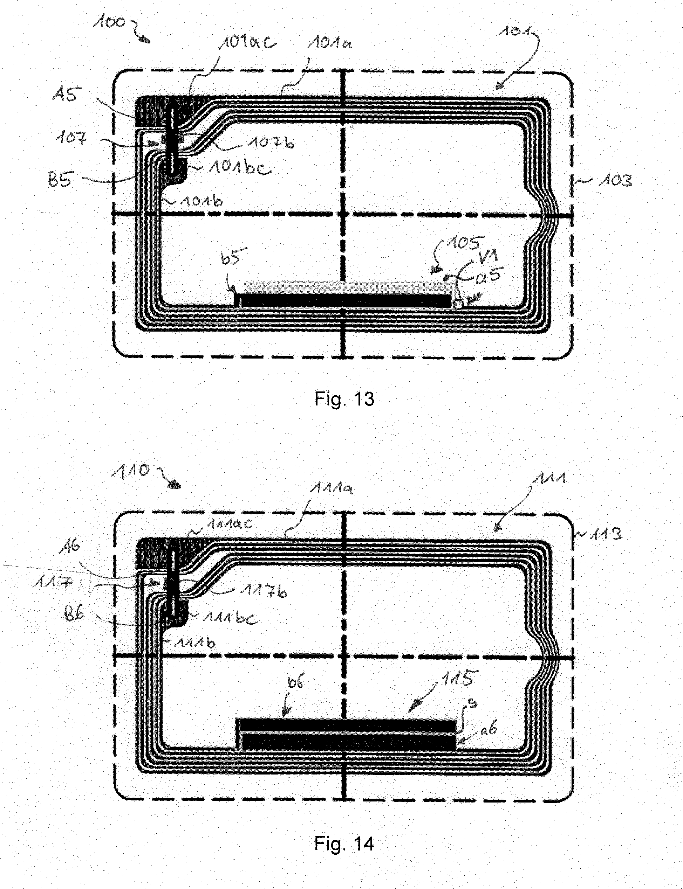

Referring to Figure 13, an antenna assembly 100 in accordance with some illustrative embodiments of the antenna assembly shown in Figure 5 is depicted. The antenna assembly 100 comprises a carrier substrate 103 (e.g., a prelaminated body for forming a smartcard or a card body of a smartcard, although this is not limiting and a tag body may be used instead), an antenna wiring pattern 101 formed on the carrier substrate 103, and a high pass filter component coupled with the antenna wiring pattern 101.

In accordance with some illustrative embodiments, the antenna wiring pattern 101 may be formed as an antenna pattern formed by patterning an antenna pattern on at least one surface of the carrier substrate 103, e.g., by depositing a conductive material layer on at least one surface of the carrier substrate 103 and etching the deposited conductive material layer into a patterned structure resulting in the antenna wiring pattern 101. This is only illustrative and, alternatively, the antenna wiring pattern 101 may be formed by printing techniques or as a wire antenna. Conductive material of the antenna wiring pattern 101 may be aluminum, gold, silver, copper, etc.

In accordance with some illustrative but non-limiting examples herein, the antenna wiring pattern 101 may be formed of a planar antenna loop portion 101a and a planar antenna loop portion 101b, the antenna loop portion 101a being formed of substantially spirally wound antenna track lines or antenna loops routed on at least one surface of the carrier substrate 103, whereas the antenna loop portion 101b is only formed of a partial or incomplete loop portion. For example, the antenna loop portion 101a may be coupled to a chip terminal A5 of a chip element 107, while the antenna loop portion 101b may be coupled with another chip terminal B5 of the chip element 107. For example, the antenna loop portion 101a may have a connection terminal 101ac, e.g., a contact pad, provided at one end, while the antenna loop portion 101b may have a connection terminal 101bc, e.g., a contact pad, provided at one end such that the chip element 107 is coupled with antenna loop portions 101a and 101b of the antenna wiring pattern 101 via the connection terminals 101ac, 101bc of the antenna wiring pattern 101, while the antenna wiring pattern 101 is connected to the high pass filter component at the opposite ends of the antenna loop portions 101a and 101b. The antenna loop portion 101a continuously connects with the high pass filter component such that an electrode a5 of the high pass filter component is continuously connected with the antenna loop portion 101a at an end of the antenna loop portion 101a opposite the connection terminal 101ac. The antenna loop portion 101b continuously connects with the high pass filter component such that an electrode b5 of the high pass filter component implements a loop of the antenna loop portion 101b, that is the innermost antenna loop of the antenna loop portion 101b directly connects with the electrode a5 of the high pass filter component, as well. Herein, the electrode a5 may be formed as a substantially strip shaped track line having a greater width than a width of the antenna loop portion 101a. Similarly, electrode b5 may be formed as a substantially strip shaped track line having a greater width than a width of the antenna loop portion 101b. As described above in the context of Figure 5, the electrodes a5 and b5 of the high pass filter component represent a filter capacitor coupled in series in between the antenna loop portion 101a and the chip terminal B5.

In some illustrative embodiments herein, the electrodes a5, b5 may be provided each with substantially strip shaped electrode sections extending on opposite surfaces of the carrier substrate 103 and thereby being separated by the carrier substrate 103 extending there between. The electrodes a5 and b5 may have different sizes with an overlapping surface along a direction normal to the surface of the carrier substrate 103 on which one of the electrodes a5, b5 is formed. The overlapping surface may be equal to the surface of one of the electrodes a5 and b5. For example, as shown in the illustration of Figure 13, the electrodes a5 and b5 may be substantially congruent with the electrode a5 being slightly greater than the electrode a5. The expression "substantially congruent" may be understood in some explicit but non-limiting example to the extent that a surface overlap of the electrodes a5 and b5 may be at least 50% with respect to the greater of the surfaces of the electrodes a5 and b5.

With ongoing reference to Figure 13, the antenna loop portion 101b provides an incomplete loop and thereby provides for a track line routing seamlessly and continuously interconnecting the connection terminal 101bc and the electrode b5, particularly extending between the connection terminal 101b and the electrode b5 on the surface of the carrier substrate 103 on which the antenna wiring pattern 101b is completely formed and connected to the chip terminal B5.

In some illustrative embodiments, the antenna loop portion 101a terminates in connection with a vertical interconnection element (via element) V1 extending through the carrier substrate 103 between the two opposite surfaces of the carrier substrate 103 on which the electrodes a5, b5 are formed. On the surface opposite the surface on which the antenna loop portion 101a is completely formed, the via element V1 electrically connects to the electrode a5. The illustration in Figure 13 shows the electrode a5 in a light grey shading as opposed to the electrode b5, thereby indicating that the electrode a5 is arranged on a surface of the carrier substrate 103 not directly visible in the top view illustrated in Figure 13. Furthermore, the via element V1 may be located adjacent the electrode b5. Accordingly, the electrodes a5, b5 may have a high degree of freedom for design and arrangement by its arrangement on another surface different from the surface on which the antenna assembly is formed.

The high pass filter component of the antenna assembly 100 may be provided by the electrodes a5 and b5 formed of a capacitive line routing on the carrier substrate 103, the capacitive line routing forming the two separated electrodes a5 and b5 on two opposite surfaces of the carrier substrate 103. For example, the capacitive line routing is formed of electrode sections of the capacitive line routing of both electrodes a5 and b5. These electrode sections may be linear line sections composing the electrodes a5 and b5 and continuously coupling to the chip terminals A5, B5 via the antenna loop portions 101a and 101b. The electrode sections or main bodies of the electrodes a5 and b5 may be routed in parallel or substantially in parallel to each other in the opposite surfaces of the carrier substrate 103. Furthermore, the capacitive line routing of one of the electrodes a5, b5 of the high pass filter component arranged on the surface on which the antenna wiring pattern 101 is formed, may be at least partially routed substantially in parallel to the antenna track lines of the antenna loop portion 101a.

With ongoing reference to Figure 13, the capacitive line routing of each electrode a5 and b5 of the high pass filter component is continuously connected to a respective one of the chip terminals A5 and B5 of the chip element 107 via a bridging portion 107b spanning over the antenna loop portion 101a between the connection terminals 101ac and 101bc. In some illustrative but non-limiting example herein, the chip element 107 with bridging portion 107b may be a flip-chip component contacting the connection terminals 101ac, 101bc and spanning over the antenna wiring pattern 101 without short circuiting the loops of the antenna wiring pattern 101.

Referring to Figure 14, an antenna assembly 110 in accordance with some illustrative embodiments of the antenna assembly shown in Figure 5 is depicted. The antenna assembly 110 comprises a carrier substrate 113 (e.g., a prelaminated body for forming a smartcard or a card body of a smartcard, although this is not limiting and a tag body may be used instead), an antenna wiring pattern 111 completely formed on one surface of the carrier substrate 113, and a high pass filter component coupled with the antenna wiring pattern 111 and completely formed on this surface of the antenna wiring pattern 111.

In accordance with some illustrative embodiments, the antenna wiring pattern 111 may be formed as an antenna pattern formed by patterning an antenna pattern on at least one surface of the carrier substrate 113, e.g., by depositing a conductive material layer on at least one surface of the carrier substrate 113 and etching the deposited conductive material layer into a patterned structure resulting in the antenna wiring pattern 111. This is only illustrative and, alternatively, the antenna wiring pattern 111 may be formed by printing techniques or as a wire antenna. Conductive material of the antenna wiring pattern 111 may be aluminum, gold, silver, copper, etc.

In accordance with some illustrative but non-limiting examples herein, the antenna wiring pattern 111 may be formed of a planar antenna loop portion 111a and a planar antenna loop portion 111b, the antenna loop portion 111a being formed of substantially spirally wound antenna track lines or antenna loops routed on at least one surface of the carrier substrate 113, whereas the antenna loop portion 111b is only formed of a partial or incomplete loop portion. For example, the antenna loop portion 111a may be coupled to a chip terminal A6 of a chip element 117, while the antenna loop portion 111b may be coupled with another chip terminal B6 of the chip element 117. For example, the antenna loop portion 111a may have a connection terminal 111ac, e.g., a contact pad, provided at one end, while the antenna loop portion 111b may have a connection terminal 111bc, e.g., a contact pad, provided at one end such that the chip element 117 is coupled with antenna loop portions 111a and 111b of the antenna wiring pattern 111 via the connection terminals 111ac, 111bc of the antenna wiring pattern 111, while the antenna wiring pattern 111 is connected to the high pass filter component at the opposite ends of the antenna loop portions 111a and 111b. The antenna loop portion 111a continuously connects with the high pass filter component such that an electrode a6 of the high pass filter component is continuously connected with the antenna loop portion 111a at an end of the antenna loop portion 111a opposite the connection terminal 111ac. The antenna loop portion 111b continuously connects with the high pass filter component such that an electrode b6 of the high pass filter component implements a loop of the antenna loop portion 111b, that is the innermost antenna loop of the antenna loop portion 111b directly connects with the electrode a6 of the high pass filter component, as well. Herein, the electrode a6 may be formed as a substantially strip shaped track line having a greater width than a width of the antenna loop portion 111a. Similarly, electrode b6 may be formed as a substantially strip shaped track line having a greater width than a width of the antenna loop portion 111b. As described above in the context of Figure 5, the electrodes a6 and b6 of the high pass filter component represent a filter capacitor coupled in series in between the antenna loop portion 111a and the chip terminal B6.

The electrodes a6, b6 are be provided each with substantially strip shaped electrode sections extending on the same surface of the carrier substrate 113 and thereby separated by a separation s, e.g., a gap of air or an insulating material, on the carrier substrate 113. The separation s may be a substantially linear or at least partially linear gap. The electrodes a6 and b6 may have equal or different sizes with a surface along which the electrodes a6 and b6 face each other in the surface of the carrier substrate 113 on which the electrodes a6 and b6 are formed. This surface may be equal to the complete lateral surface of one of the electrodes a6 and b6 facing the other electrode of the electrodes a6 and b6.

With ongoing reference to Figure 14, the antenna loop portion 111b provides an incomplete loop and thereby provides for a track line routing seamlessly and continuously interconnecting the connection terminal 111bc and the electrode b6, particularly extending between the connection terminal 111b and the electrode b6 on the surface of the carrier substrate 113 on which the antenna wiring pattern 111b is completely formed and connected to the chip terminal B6. Accordingly, fabrication of the antenna assembly 110 may be easy in using only one surface of the carrier substrate 113.

The high pass filter component of the antenna assembly 110 may be provided by the electrodes a6 and b6 formed of a capacitive line routing on the carrier substrate 113, the capacitive line routing forming the two separated electrodes a6 and b6 on the same surface of the carrier substrate 113. For example, the capacitive line routing is formed of electrode sections of the capacitive line routing of both electrodes a6 and b6. These electrode sections may be linear line sections, e.g., strip shaped line sections, composing the electrodes a6 and b6 and continuously coupling to the chip terminals A6, B6 via the antenna loop portions 111a and 111b. The electrode sections (representing main bodies of the electrodes a6 and b6) may be routed partially in parallel or substantially in parallel to each other on the surface of the carrier substrate 113. Furthermore, the capacitive line routing of the electrodes a6, b6 of the high pass filter component may be at least partially routed substantially in parallel to the antenna track lines of the antenna loop portion 111a.

With ongoing reference to Figure 14, the capacitive line routing of each electrode a6 and b6 of the high pass filter component is continuously connected to a respective one of the chip terminals A6 and B6 of the chip element 117 via a bridging portion 117b spanning over the antenna loop portion 111a between the connection terminals 111ac and 111bc. In some illustrative but non-limiting example herein, the chip element 117 with bridging portion 117b may be a flip-chip component contacting the connection terminals 111ac, 111bc and spanning over the antenna wiring pattern 111 without short circuiting the loops of the antenna wiring pattern 111.

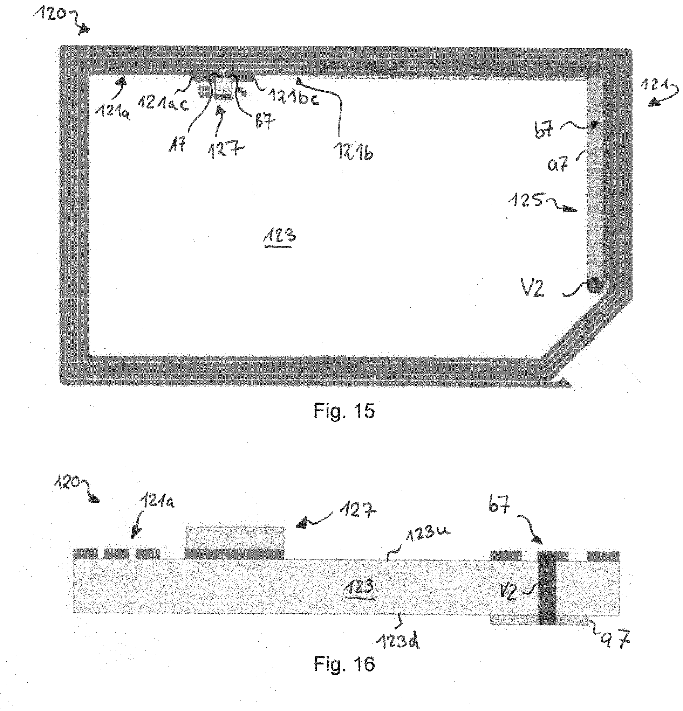

Referring to Figure 15, an antenna assembly 120 in accordance with some illustrative embodiments of the antenna assembly shown in Figure 5 is depicted. The antenna assembly 120 comprises a carrier substrate 123 (e.g., a prelaminated body for forming a smartcard or a card body of a smartcard, although this is not limiting and a tag body may be used instead), an antenna wiring pattern 121 formed on the carrier substrate 123, and a high pass filter component coupled with the antenna wiring pattern 121.

In accordance with some illustrative embodiments, the antenna wiring pattern 121 may be formed as an antenna pattern formed by patterning an antenna pattern on at least one surface of the carrier substrate 123, e.g., by depositing a conductive material layer on at least one surface of the carrier substrate 123 and etching the deposited conductive material layer into a patterned structure resulting in the antenna wiring pattern 121. This is only illustrative and, alternatively, the antenna wiring pattern 121 may be formed by printing techniques or as a wire antenna. Conductive material of the antenna wiring pattern 121 may be aluminum, gold, silver, copper, etc.

In accordance with some illustrative but non-limiting examples herein, the antenna wiring pattern 121 may be formed of a planar antenna loop portion 121a and a planar antenna loop portion 121b, the antenna loop portion 121a being formed of substantially spirally wound antenna track lines or antenna loops routed on at least one surface of the carrier substrate 123, whereas the antenna loop portion 121b is only formed of a partial or incomplete loop portion. For example, the antenna loop portion 121a may be coupled to a chip terminal A7 of a chip element 127, while the antenna loop portion 121b may be coupled with another chip terminal B7 of the chip element 127. For example, the antenna loop portion 121a may have a connection terminal 121ac, e.g., a contact pad, provided at one end, while the antenna loop portion 121b may have a connection terminal 121bc, e.g., a contact pad, provided at one end such that the chip element 127 is coupled with antenna loop portions 121a and 121b of the antenna wiring pattern 121 via the connection terminals 121ac, 121bc of the antenna wiring pattern 121, while the antenna wiring pattern 121 is connected to the high pass filter component at the opposite ends of the antenna loop portions 121a and 121b. The antenna loop portion 121a continuously connects with the high pass filter component such that an electrode a7 of the high pass filter component is continuously connected with the antenna loop portion 121a at an end of the antenna loop portion 121a opposite the connection terminal 121ac. The antenna loop portion 121b continuously connects with the high pass filter component such that an electrode b7 of the high pass filter component implements a loop of the antenna loop portion 121b, that is the innermost antenna loop of the antenna loop portion 121b directly connects with the electrode a7 of the high pass filter component, as well. Herein, the electrode a7 may be formed as a substantially strip shaped track line having a greater width than a width of the antenna loop portion 121a. Similarly, electrode b7 may be formed as a substantially strip shaped track line having a greater width than a width of the antenna loop portion 121b. As described above in the context of Figure 5, the electrodes a7 and b7 of the high pass filter component represent a filter capacitor coupled in series in between the antenna loop portion 121a and the chip terminal B7.

In some illustrative embodiments herein, the electrodes a7, b7 may be provided each with substantially strip shaped and linearly extending electrode sections extending on opposite surfaces of the carrier substrate 123 and thereby being separated by the carrier substrate 123 extending there between. The electrodes a7 and b7 may have different sizes with an overlapping surface along a direction normal to the surface of the carrier substrate 123 on which one of the electrodes a7, b7 is formed. The electrode a7 is indicated in the illustration by a shaded area with broken-line boundary which means that electrode a7 is arranged below the electrode b7 in the view of Figure 15, indicating that electrode a7 and electrode b7 are formed on opposite surfaces of the carrier substrate 123.

In some illustrative examples, the electrode a7 may be formed by strip sections formed in an L shape, however not imposing any limitation on the present disclosure. The electrode b7 may be provided by overlapping sections of the electrode a7 with loop sections of the antenna loop portion 121a overlapping the electrode a7 in the top view illustrated in Figure 15.

With ongoing reference to Figure 15, the antenna loop portion 121b provides an incomplete loop and thereby provides for a track line routing seamlessly and continuously interconnecting the connection terminal 121bc and the electrode a7, particularly extending between the connection terminal 121b and the electrode a7, the electrode a7 being connected to the chip terminal B7 via the antenna loop portion 121b.

Referring to the side view illustrated in Figure 16, the antenna loop portion 121b terminates in direct connection with a vertical interconnection element (via element) V2 extending through the carrier substrate 123 between the two opposite surfaces 123u and 123d of the carrier substrate 123 on which the electrodes a7, b7 are formed. On the surface 123d opposite the surface 123u on which the antenna loop portion 121a (providing the electrode b7) is completely formed, the via element V2 electrically connects to the electrode a7. The illustration in Figure 16 shows the electrode a7 in an arrangement opposing the electrode b7, thereby indicating that the electrode a7 is arranged on the surface 123d of the carrier substrate 123. Accordingly, the electrodes a5, b5 may have a high degree of freedom for design and arrangement by its arrangement on the opposing surfaces 123u and 123d of the carrier substrate 123.

The high pass filter component of the antenna assembly 120 may be provided by the electrodes a7 and b7 formed of a capacitive line routing on the carrier substrate 123, the capacitive line routing forming the two separated electrodes a7 and b7 on two opposite surfaces of the carrier substrate 123. For example, the capacitive line routing is formed of electrode sections of the capacitive line routing of both electrodes a7 and b7. These electrode sections may be linear line sections composing the electrodes a7 and b7 and continuously coupling to the chip terminals A7, B7 via the antenna loop portions 121a and 121b. The electrode sections or main bodies of the electrodes a7 and b7 may be routed in parallel or substantially in parallel to each other in the surfaces 123u and 123d of the carrier substrate 123. Furthermore, the capacitive line routing of one of the electrodes a7, b7 of the high pass filter component arranged on the surface on which the antenna wiring pattern 121 is formed, may be at least partially routed substantially in parallel to the antenna track lines of the antenna loop portion 121a.

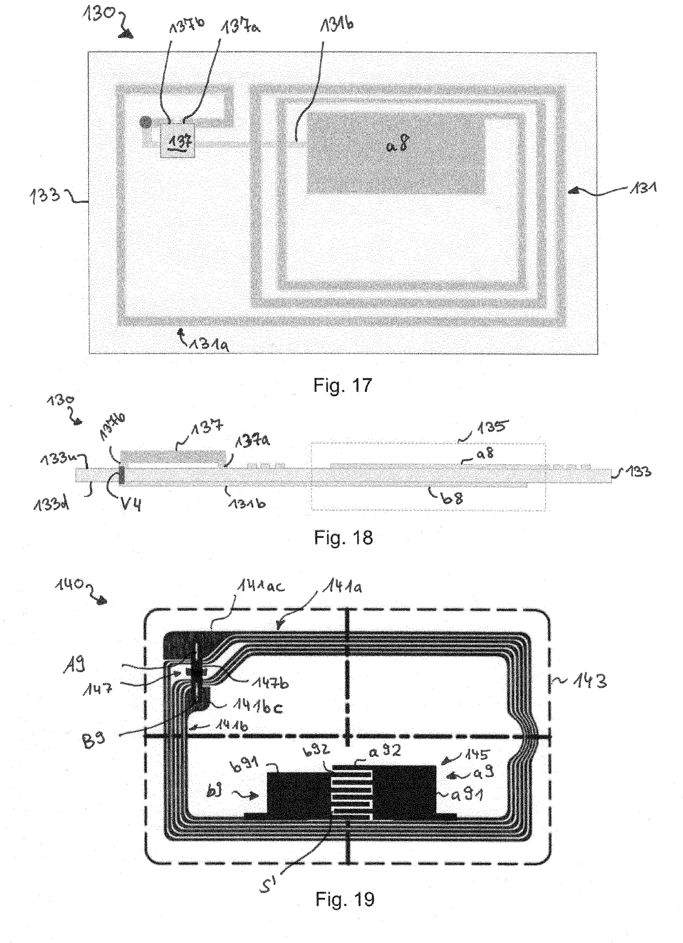

Referring to Figure 17, an antenna assembly 130 in accordance with some illustrative embodiments of the antenna assembly shown in Figure 5 is depicted. The antenna assembly 130 comprises a carrier substrate 133 (e.g., a prelaminated body for forming a smartcard or a card body of a smartcard, although this is not limiting and a tag body may be used instead), an antenna wiring pattern 131 formed on the carrier substrate 133, and a high pass filter component coupled with the antenna wiring pattern 131.

In accordance with some illustrative embodiments, the antenna wiring pattern 131 may be formed as an antenna pattern formed by patterning an antenna pattern on at least one surface of the carrier substrate 133, e.g., by depositing a conductive material layer on at least one surface of the carrier substrate 133 and etching the deposited conductive material layer into a patterned structure resulting in the antenna wiring pattern 131. This is only illustrative and, alternatively, the antenna wiring pattern 131 may be formed by printing techniques or as a wire antenna. Conductive material of the antenna wiring pattern 131 may be aluminum, gold, silver, copper, etc.

In accordance with some illustrative but non-limiting examples herein, the antenna wiring pattern 131 may be formed of a planar antenna loop portion 131a and a planar track portion 131b, the antenna loop portion 131a being formed of substantially spirally wound antenna track lines or antenna loops routed on at least one surface of the carrier substrate 133, whereas the track portion 131b is only formed of a linear strip with an optional L-shaped extension for extending towards the via V4. For example, the antenna loop portion 131a may be coupled to a chip terminal 137a of a chip element 137, while the track portion 131b may be coupled with another chip terminal 137b of the chip element 137. For example, the antenna loop portion 131a may have a connection terminal, e.g., a contact pad (not illustrated), provided at one end, while the track portion 131b may have a connection terminal, e.g., a contact pad (not illustrated), provided at one end such that the chip element 137 is coupled with antenna loop portion 131a of the antenna wiring pattern 131 and the track portion 131b via the chip terminals 137a, 137b, while the antenna wiring pattern 131 is connected to the high pass filter component at the opposite ends of the antenna loop portion 131a and the track portion 131b. The antenna loop portion 131a continuously connects with the high pass filter component such that an electrode a8 of the high pass filter component is continuously connected with the antenna loop portion 131a at an end of the antenna loop portion 131a opposite the connection terminal. The track portion 131b continuously connects with the high pass filter component such that an electrode b8 of the high pass filter component implements a capacitance with the electrode a8. The innermost antenna loop of the antenna loop portion 131a directly connects with the electrode a8 of the high pass filter component, as well. Herein, the electrode a8 may be formed as a substantially plate shaped element, e.g., a strip shaped track line having a greater width than a width of the antenna loop portion 131a by a factor of at least 2 or at least 5 or least 10. Similarly, electrode b8 may be formed as a substantially plate shape congruent with the electrode a8. As described above in the context of Figure 5, the electrodes a8 and b8 of the high pass filter component represent a filter capacitor coupled in series in between the antenna loop portion 131a and the chip terminal 137b.

In some illustrative embodiments herein, the electrodes a8, b8 are provided each with substantially strip shaped and linearly extending electrode sections extending on opposite surfaces of the carrier substrate 133 and thereby being separated by the carrier substrate 133 extending there between. The electrodes a8 and b8 may have equal sizes but this does not impose any limitation and, instead, the electrodes a8 and b8 may have different sizes with an overlapping surface along a direction normal to the surface of the carrier substrate 133 on which one of the electrodes a8, b8 is formed.

With ongoing reference to Figure 17, the track portion 131b provides an linear strip and thereby provides for a track line routing seamlessly and continuously interconnecting the connection terminal 137b and the electrode b8, particularly extending between the connection terminal 137b and the electrode b8 in a linear manner. The electrode a8 is connected to the chip terminal 137a via the antenna loop portion 131a.

Referring to the side view illustrated in Figure 18, the track portion 131b terminates in direct connection with a vertical interconnection element (via element) V4 extending through the carrier substrate 133 between two opposite surfaces 133u and 133d of the carrier substrate 133 on which the electrodes a8, b8 are formed. On the surface 133d opposite the surface 133u on which the antenna loop portion 131a (providing the electrode a8) is completely formed, the via element V4 electrically connects to the electrode b8, while on the surface 133u, the via element V4 directly connects to the chip terminal 137b of the chip element 137. The illustration in Figure 18 shows the via element V4 in alignment with the chip terminal 137b such that the via V4 is adjacent the chip element 37 and it is connected with a contact pad contacting the chip terminal 137b. The electrode a8 is arranged opposite the electrode b8. Accordingly, the electrodes a8, b8 may have a high degree of freedom for design and arrangement by its arrangement on the opposing surfaces 133u and 133d of the carrier substrate 133.

The high pass filter component of the antenna assembly 130 may be provided by the electrodes a8 and b8 formed of a capacitive line routing on the carrier substrate 133, the capacitive line routing forming the two separated electrodes a8 and b8 on two opposite surfaces of the carrier substrate 133. For example, the capacitive line routing is formed of electrode sections of the capacitive line routing of both electrodes a8 and b8. These electrode sections may be plate shaped portions composing the electrodes a8 and b8 and continuously coupling to the chip terminals 137a, 137b via the antenna loop portion 131a and the track portion 131b. The electrode sections or main bodies of the electrodes a8 and b8 may be routed in parallel or substantially in parallel to each other in the surfaces 133u and 133d of the carrier substrate 133. Furthermore, the capacitive line routing of one of the electrodes a8, b8 of the high pass filter component arranged on the surface on which the antenna wiring pattern 131 is formed, may be at least partially routed substantially in parallel to the antenna track lines of the antenna loop portion 131a.

Referring to Figure 19, an antenna assembly 140 in accordance with some illustrative embodiments of the antenna assembly shown in Figure 5 is depicted. The antenna assembly 140 comprises a carrier substrate 143 (e.g., a prelaminated body for forming a smartcard or a card body of a smartcard, although this is not limiting and a tag body may be used instead), an antenna wiring pattern 141 completely formed on one surface of the carrier substrate 143, and a high pass filter component coupled with the antenna wiring pattern 141 and completely formed on this surface of the antenna wiring pattern 141.

In accordance with some illustrative embodiments, the antenna wiring pattern 141 may be formed as an antenna pattern formed by patterning an antenna pattern on at least one surface of the carrier substrate 143, e.g., by depositing a conductive material layer on at least one surface of the carrier substrate 143 and etching the deposited conductive material layer into a patterned structure resulting in the antenna wiring pattern 141. This is only illustrative and, alternatively, the antenna wiring pattern 141 may be formed by printing techniques or as a wire antenna. Conductive material of the antenna wiring pattern 111 may be aluminum, gold, silver, copper, etc.

In accordance with some illustrative but non-limiting examples herein, the antenna wiring pattern 141 may be formed of a planar antenna loop portion 141a and a planar antenna loop portion 141b, the antenna loop portion 141a being formed of substantially spirally wound antenna track lines or antenna loops routed on at least one surface of the carrier substrate 143, whereas the antenna loop portion 141b is only formed of a partial or incomplete loop portion. For example, the antenna loop portion 141a may be coupled to a chip terminal A9 of a chip element 147, while the antenna loop portion 141b may be coupled with another chip terminal B9 of the chip element 147. For example, the antenna loop portion 141a may have a connection terminal 141ac, e.g., a contact pad, provided at one end, while the antenna loop portion 141b may have a connection terminal 141bc, e.g., a contact pad, provided at one end such that the chip element 147 is coupled with antenna loop portions 141a and 141b of the antenna wiring pattern 141 via the connection terminals 141ac, 141be of the antenna wiring pattern 141, while the antenna wiring pattern 141 is connected to the high pass filter component at the opposite ends of the antenna loop portions 141a and 141b. The antenna loop portion 141a continuously connects with the high pass filter component such that an electrode a9 of the high pass filter component is continuously connected with the antenna loop portion 141a at an end of the antenna loop portion 141a opposite the connection terminal 141ac. The antenna loop portion 141b continuously connects with the high pass filter component such that an electrode b9 of the high pass filter component implements a loop of the antenna loop portion 141b, that is the innermost antenna loop of the antenna loop portion 141b directly connects with the electrode a9 of the high pass filter component, as well. Herein, the electrode a9 may be formed as a substantially strip shaped track line(c.f. reference numeral a91 as described below) having a greater width than a width of the antenna loop portion 141a by at least a factor of 2 or 5 or 10. Similarly, electrode b9 may be formed as a substantially strip shaped track line(c.f. reference numeral b91 as described below) having a greater width than a width of the antenna loop portion 141b by at least a factor of 2 or 5 or 10. As described above in the context of Figure 5, the electrodes a9 and b9 of the high pass filter component represent a filter capacitor coupled in series in between the antenna loop portion 141a and the chip terminal B9.

The electrodes a9, b9 are be provided each with substantially strip shaped electrode sections (c.f. reference numerals a91, b91 as described below) extending on the same surface of the carrier substrate 143 and thereby separated by a separation s', e.g., a gap of air or an insulating material, on the carrier substrate 143. For example, the separation s' may be a substantially meander shaped gap composed of at least one portion of substantially s shape.

The electrodes a9 and b9 may have equal or different sizes with a surface along which the electrodes a9 and b9 face each other in the surface of the carrier substrate 143 on which the electrodes a9 and b9 are formed. This surface may be equal to the complete lateral surface of one of the electrodes a9 and b9 facing the other electrode of the electrodes a9 and b9.

With ongoing reference to Figure 19, the antenna loop portion 141b provides an incomplete loop and thereby provides for a track line routing seamlessly and continuously interconnecting the connection terminal 141bc and the electrode b9, particularly extending between the connection terminal 141b and the electrode b9 on the surface of the carrier substrate 143 on which the antenna wiring pattern 141b is completely formed and connected to the chip terminal B9. Accordingly, fabrication of the antenna assembly 140 may be easy in using only one surface of the carrier substrate 143.

The high pass filter component of the antenna assembly 140 may be provided by the electrodes a9 and b9 formed of a capacitive line routing on the carrier substrate 143, the capacitive line routing forming the two separated electrodes a9 and b9 on the same surface of the carrier substrate 143. For example, the capacitive line routing is formed of electrode sections of the capacitive line routing of both electrodes a9 and b9. These electrode sections may be substantially strip shaped line sections composing main bodies a91, b91 of the electrodes a9 and b9 and continuously coupling to the chip terminals A9, B9 via the antenna loop portions 141a and 141b. The main bodies a91, b91 of the electrodes a9 and b9 may be routed partially in parallel or substantially in parallel to each other on the surface of the carrier substrate 143. Furthermore, the capacitive line routing of the electrodes a9, b9 of the high pass filter component may be at least partially routed substantially in parallel to the antenna track lines of the antenna loop portion 141a.

With ongoing reference to Figure 19, the capacitive line routing of each electrode a9 and b9 of the high pass filter component is continuously connected to a respective one of the chip terminals A9 and B9 of the chip element 147 via a bridging portion 147b spanning over the antenna loop portion 141a between the connection terminals 141ac and 141bc. In some illustrative but non-limiting example herein, the chip element 147 with bridging portion 147b may be a flip-chip component contacting the connection terminals 141ac, 141bc and spanning over the antenna wiring pattern 141 without short circuiting the loops of the antenna wiring pattern 141.

In some illustrative embodiments and as shown in the illustration of Figure 19, the electrodes a9, b9 may be provided each with at least one finger element a92, b92 interleaved or meshing with each other, resulting in a comb structure of the capacitance having a comparatively increased area of capacitance between the electrodes. Accordingly, the electrodes a9, b9 may provide a comb structure of interleaved or meshing fingers a92, b92 formed on strip shaped main bodies a91, b91. The high pass filter component of the antenna assembly 140 may be provided by the electrodes a9 and b9 formed of a capacitive line routing on the carrier substrate 143, the capacitive line routing forming the two separated electrodes a9 and b9. For example, the capacitive line routing is formed of electrode sections of the capacitive line routing of both electrodes a9 and b9. These electrode sections may be linear line sections composing the electrodes a9 and b9 and continuously coupling to the chip terminals A9, B9 via the antenna loop portions 141a and 141b. The electrode sections or main bodies of the electrodes a9 and b9 may be routed in parallel or substantially in parallel to each other. Furthermore, the capacitive line routing of the high pass filter component may be at least partially routed substantially in parallel to the antenna track lines of the antenna loop portion 141a.

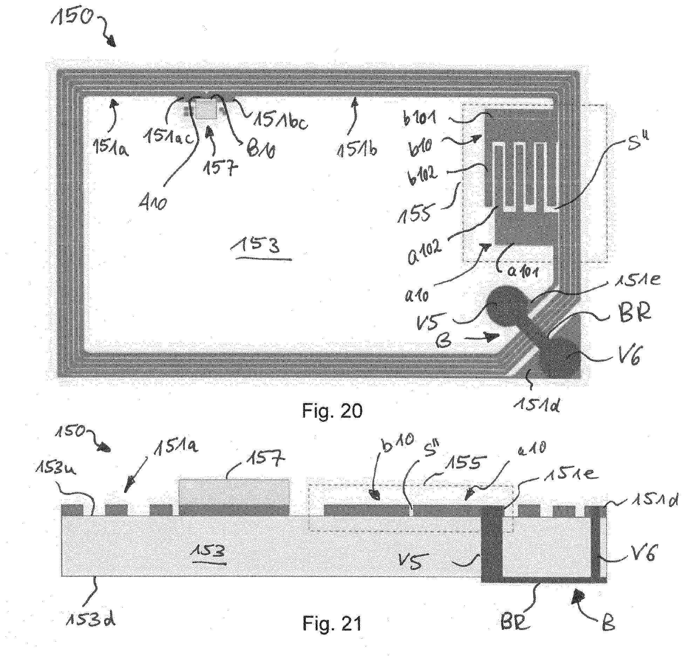

Referring to Figure 20, an antenna assembly 150 in accordance with some illustrative embodiments of the antenna assembly shown in Figure 5 is depicted. The antenna assembly 150 comprises a carrier substrate 153 (e.g., a prelaminated body for forming a smartcard or a card body of a smartcard, although this is not limiting and a tag body may be used instead), an antenna wiring pattern 151 formed on the carrier substrate 153, and a high pass filter component coupled with the antenna wiring pattern 151.

In accordance with some illustrative embodiments, the antenna wiring pattern 151 may be formed as an antenna pattern formed by patterning an antenna pattern on at least one surface of the carrier substrate 153, e.g., by depositing a conductive material layer on at least one surface of the carrier substrate 153 and etching the deposited conductive material layer into a patterned structure resulting in the antenna wiring pattern 151. This is only illustrative and, alternatively, the antenna wiring pattern 151 may be formed by printing techniques or as a wire antenna. Conductive material of the antenna wiring pattern 151 may be aluminum, gold, silver, copper, etc.

In accordance with some illustrative but non-limiting examples herein, the antenna wiring pattern 151 may be formed of a planar antenna loop portion 151a and a planar antenna loop portion 151b, the antenna loop portion 151a being formed of substantially spirally wound antenna track lines or antenna loops routed on at least one surface of the carrier substrate 123, whereas the antenna loop portion 121b is only formed of a partial or incomplete loop portion. For example, the antenna loop portion 151a may be coupled to a chip terminal A10 of a chip element 157, while the antenna loop portion 151b may be coupled with another chip terminal B10 of the chip element 157. For example, the antenna loop portion 151a may have a connection terminal 151ac, e.g., a contact pad, provided at one end, while the antenna loop portion 151b may have a connection terminal 151bc, e.g., a contact pad, provided at one end such that the chip element 157 is coupled with antenna loop portions 151a and 151b of the antenna wiring pattern 151 via the connection terminals 151ac, 151be of the antenna wiring pattern 151, while the antenna wiring pattern 151 is connected to the high pass filter component at the opposite ends of the antenna loop portions 151a and 151b.

As shown in Figure 20, the antenna loop portion 151a continuously connects with the high pass filter component by means of a bridging element B such that an electrode a10 of the high pass filter component is continuously connected with the antenna loop portion 151a at an end of the antenna loop portion 151a via the bridging element B opposite the connection terminal 151ac. The antenna loop portion 151b continuously connects with the high pass filter component such that an electrode b10 of the high pass filter component implements a loop of the antenna loop portion 151b, that is the innermost antenna loop of the antenna loop portion 151b directly connects with the electrode a10 of the high pass filter component, as well. Herein, the electrode a10 may be formed as a substantially strip shaped track line having a greater width than a width of the antenna loop portion 151a. Similarly, electrode b10 may be formed as a substantially strip shaped track line having a greater width than a width of the antenna loop portion 151b. As described above in the context of Figure 5, the electrodes a10 and b10 of the high pass filter component represent a filter capacitor coupled in series in between the antenna loop portion 151a and the chip terminal B10.

The electrodes a10, b10 are be provided each with substantially strip shaped electrode sections (c.f. reference numerals a101, b101 as described below) extending on the same surface of the carrier substrate 153 and thereby separated by a separation s", e.g., a gap of air or an insulating material, on the carrier substrate 153. For example, the separation s" may be a substantially meander shaped gap composed of at least one portion of substantially s shape.

The electrodes a10 and b10 may have equal or different sizes with a surface along which the electrodes a10 and b10 face each other in the surface of the carrier substrate 153 on which the electrodes a10 and b10 are formed. This surface may be equal to the complete lateral surface of one of the electrodes a10 and b10 facing the other electrode of the electrodes a10 and b10.

With ongoing reference to Figure 20, the antenna loop portion 151b provides an incomplete loop and thereby provides for a track line routing seamlessly and continuously interconnecting the connection terminal 151be and the electrode b10, particularly extending between the connection terminal 151b and the electrode b10 on the surface of the carrier substrate 153 on which the antenna wiring pattern 151b is completely formed and connected to the chip terminal B10. Accordingly, fabrication of the antenna assembly 150 may be easy in using only one surface of the carrier substrate 153.

The high pass filter component of the antenna assembly 150 may be provided by the electrodes a10 and b10 formed of a capacitive line routing on the carrier substrate 153, the capacitive line routing forming the two separated electrodes a10 and b10 on the same surface of the carrier substrate 153. For example, the capacitive line routing is formed of electrode sections of the capacitive line routing of both electrodes a10 and b10. These electrode sections may be substantially strip shaped line sections composing main bodies a101, b101 of the electrodes a10 and b10 and continuously coupling to the chip terminals A10, B10 via the antenna loop portions 151a and 151b. The main bodies a101, b101 of the electrodes a10 and b10 may be routed partially in parallel or substantially in parallel to each other on the surface of the carrier substrate 153. Furthermore, the capacitive line routing of the electrodes a10, b10 of the high pass filter component may be at least partially routed substantially in parallel to the antenna track lines of the antenna loop portion 151a.

With reference to Figures 20 and 21, the capacitive line routing of the electrode a10 and b10 of the high pass filter component is continuously connected to a contact pad 151d of the antenna loop portion 151a opposite the connection terminal 151ac of the antenna loop portion 151a via the bridging element B interconnecting the contact pad 151d with a contact pad 151e of the electrode a10. The bridging element B comprises via contacts V5 and V6 connected with the contact pads 151d and 151e and connecting to a bridging track BR located on a surface 153d opposite the surface 153u on which the antenna loop portion 151a is completely formed. Accordingly, the electrode a10 is in series connection with the antenna loop portion 151a via the bridging element B.

Referring to Figure 20, the electrodes a10, b10 may be provided each with at least one finger element a102, b102 interleaved or meshing with each other, resulting in a comb structure of the capacitance having a comparatively increased area of capacitance between the electrodes. Accordingly, the electrodes a10, b10 may provide a comb structure of interleaved or meshing fingers a102, b102 formed on strip shaped main bodies a101, b101. The high pass filter component of the antenna assembly 150 may be provided by the electrodes a10 and b10 formed of a capacitive line routing on the carrier substrate 153, the capacitive line routing forming the two separated electrodes a10 and b10. For example, the capacitive line routing is formed of electrode sections of the capacitive line routing of both electrodes a10 and b10. These electrode sections may be linear line sections composing the electrodes a10 and b10 and continuously coupling to the chip terminals A10, B10 via the antenna loop portions 151a and 151b and the bridging element B. The main bodies a101, b101 of the electrodes a10 and b10 may be routed in parallel or substantially in parallel to each other. Furthermore, the capacitive line routing of the high pass filter component may be at least partially routed substantially in parallel to the antenna track lines of the antenna loop portion 151a. The fingers a102, b102 may be formed substantially in parallel with the linearly extending sections of the antenna loop portion 151a running along the high pass filter component.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" or "substantially" as applied to a particular value of a range applies to both values, and unless otherwise dependent on the precision of the instrument measuring the value, may indicate +/- 10% of the stated value(s).

In summary, various embodiments as described herein provide for an antenna assembly, comprising a carrier substrate, an antenna wiring pattern formed on the carrier substrate, and a filter component coupled with the antenna wiring pattern, wherein at least one of the antenna wiring pattern is formed of an antenna loop portion having less than three winding turns with the filter component comprising a tuning capacitor, and the filter component comprises a high pass filter component.

## Claims

1. An antenna assembly, comprising:
a carrier substrate;
an antenna wiring pattern formed on the carrier substrate; and
a high pass filter component coupled with the antenna wiring pattern, preferably, the high pass filter component being coupled in series with the antenna wiring pattern.

2. The antenna assembly of claim 1, wherein the antenna wiring pattern is formed of a planar antenna loop portion, such as an etched or printed antenna loop portion or antenna loop portion formed of a flat wire, the antenna loop portion being formed of substantially spirally wound antenna track lines routed on a surface of the carrier substrate.

3. The antenna assembly of claim 2, wherein the antenna track lines are at least partially routed for the antenna track lines being continuously coupled to one connection terminal provided at one end of the antenna wiring pattern and the high pass filter component being directly connected to another end of the antenna wiring pattern.

4. The antenna assembly of one of claims 1 to 3, further comprising a chip element coupled with at least one connection terminal of the antenna wiring pattern via at least a respective one of chip terminals of the chip element, wherein the high pass filter component comprises a filter capacitor coupled in series with the chip and the antenna wiring pattern.

5. The antenna assembly of one of claim 4, wherein the filter capacitor is formed of a capacitive line routing on the carrier substrate, the capacitive line routing forming two separated electrodes of the filter capacitor.

6. The antenna assembly of claim 5, wherein the capacitive line routing is formed of electrode sections of the capacitive line routing of both electrodes, which electrode sections of one of the electrodes are routed substantially in parallel to electrode sections of the other one of the electrodes.

7. The antenna assembly of claim 6, wherein the electrode sections provide a strip-shaped electrode portion for each of the electrodes, for example each electrode further comprising at least one finger portion continuously formed with and extending away from the strip-shaped electrode portion such that the electrodes are provided in an interleaved arrangement in which the finger portions are engaging or meshing with each other.

8. The antenna assembly of claim 5 or 6, wherein the capacitive line routing is at least partially routed in shape of a spiral routing, the electrode sections of the electrodes preferably being arranged in parallel sections.

9. The antenna assembly of one of claims 5 to 8 in combination with claim 2 or 3, wherein the capacitive line routing is at least partially routed in parallel to the antenna track lines.

10. The antenna assembly of one of claims 5 to 9, wherein the capacitive line routing of one electrode is continuously connected to a respective one of the chip terminals of the chip element via the antenna track lines, the other electrode being preferably connected to the other one of the chip terminals via a vertical interconnection formed in the carrier substrate so as to completely extend through the carrier substrate.

11. The antenna assembly of one of claims 5 to 10, wherein capacitive lines of the capacitive line routing are routed such that each of the capacitive lines of one electrode of the filter capacitor have capacitive lines of the other electrode of the filter capacitor running along one of its sides or the electrodes being formed on opposite surfaces of the carrier substrate interconnected by vertical interconnections extending between end terminals of the capacitive line routing through the carrier substrate.

12. A smart tag or smartcard, comprising the antenna assembly of one of claims 1 to 11, wherein the antenna assembly is integrated into a body of the smart tag or smartcard.

13. An antenna assembly, comprising:
a carrier substrate;
an antenna wiring pattern formed on the carrier substrate, wherein the antenna wiring pattern is formed of an antenna loop portion having less than three winding turns; and
a tuning capacitor coupled with the antenna wiring pattern so as to tune a resonance frequency of a circuitry formed by the antenna wiring pattern and the tuning capacitor to a desired value.

14. The antenna assembly of claim 13, wherein at least one of:
the antenna assembly further comprises a chip element coupled with connection terminals of the antenna wiring pattern via respective chip terminals of the chip element, wherein the tuning capacitor is coupled to the chip element by means of the chip terminals; and
the antenna wiring pattern is formed of a planar antenna loop portion formed of spirally wound antenna track line circuitry routed on a surface of the carrier substrate.

15. The antenna assembly of claim 13 or 14, wherein the tuning capacitor is formed of a capacitive line routing on the carrier substrate, the capacitive line routing forming two separated electrodes of the tuning capacitor, and
wherein the capacitive line routing is preferably formed of electrode sections of the capacitive line routing of both electrodes, which electrode sections of one of the electrodes may be routed in parallel or substantially in parallel to electrode sections of the other one of the electrodes, and/or
wherein the capacitive line routing is preferably at least partially routed in shape of a spiral routing or the capacitive line routing is preferably at least partially routed in shape of a comb routing having intermeshing or engaging finger portions.

16. A smart tag or smartcard, comprising the antenna assembly of one of claims 13 to 15, wherein the antenna assembly is integrated into a body of the smart tag or smartcard.
